(19) Europäisches Patentamt
European Patent Office
Office européen des brevets

(11) EP 4 500 122 B1

# (12) FASCICULE DE BREVET EUROPEEN

(45) Date de publication et mention de la délivrance du brevet:
**02.09.2026 Bulletin 2026/36**

(21) Numéro de dépôt: **23702362.7**

(22) Date de dépôt: **02.02.2023**

(51) Classification Internationale des Brevets (IPC):
***G01H 3/00*** *(2006.01)* ***G07C 5/02*** *(2006.01)*

(52) Classification Coopérative des Brevets (CPC):
**G01H 3/00;** G07C 5/02

(86) Numéro de dépôt international:
**PCT/EP2023/052529**

(87) Numéro de publication internationale:
**WO 2023/186372 (05.10.2023 Gazette 2023/40)**

## (54) SYSTEME ET PROCEDE PERMETTANT LA DETECTION ACOUSTIQUE DES PHASES D'UN CYCLE DE CAMION MINIER

SYSTEM UND VERFAHREN ZUR AKUSTISCHEN ERKENNUNG DER PHASEN EINES BERGBAU-SCHLEPPZYKLUS

SYSTEM AND METHOD ALLOWING ACOUSTIC DETECTION OF THE PHASES OF A MINING-TRUCK CYCLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.03.2022 FR 2202807**

(43) Date de publication de la demande:
**05.02.2025 Bulletin 2025/06**

(73) Titulaire: **COMPAGNIE GENERALE DES ETABLISSEMENTS MICHELIN**
**63000 Clermont-Ferrand (FR)**

(72) Inventeurs:
- **PATURLE, Antoine**
  **63040 CLERMONT-FERRAND CEDEX 09 (FR)**
- **CONTRERAS, Marcos**
  **63040 CLERMONT-FERRAND CEDEX 09 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**US-A1- 2015 020 609 US-A1- 2021 219 493**

- **CHENG CHIEH-FENG ET AL: "Activity analysis of construction equipment using audio signals and support vector machines", AUTOMATION IN CONSTRUCTION, ELSEVIER, AMSTERDAM, NL, vol. 81, 22 June 2017 (2017-06-22), pages 240 - 253, XP085112334, ISSN: 0926-5805, DOI: 10.1016/J.AUTCON.2017.06.005**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

### Domaine Technique

L'invention concerne un système et procédé permettant le traitement automatique d'un signal pour identifier les évènements acoustiques et pour déterminer, à partir de ces évènements acoustiques, des scènes acoustiques correspondantes aux phases du cycle minier.

### Contexte

Dans le domaine de l'exploitation minière, les opérations minières typiques impliquent le chargement de l'agrégat sur plusieurs véhicules miniers, particulièrement les camions de transport miniers. Ces camions de transport (ou « camions miniers » ou « camions ») peuvent effectuer plusieurs trajets par jour entre un site de chargement et un site de décharge (par exemple, une installation de traitement ou d'expédition). Ces camions sont configurés pour effectuer des opérations cycliques liées à diverses industries, telles que les mines, la foresterie, la gestion des déchets, la construction et les carrières, le transport, la logistique et l'agriculture. La charge peut comprendre des matériaux de construction et/ou d'autres matériaux tels que du sable, du gravier, des pierres, des rochers, de la terre, de l'asphalte, du charbon, des minerais, et autres matériaux d'excavation.

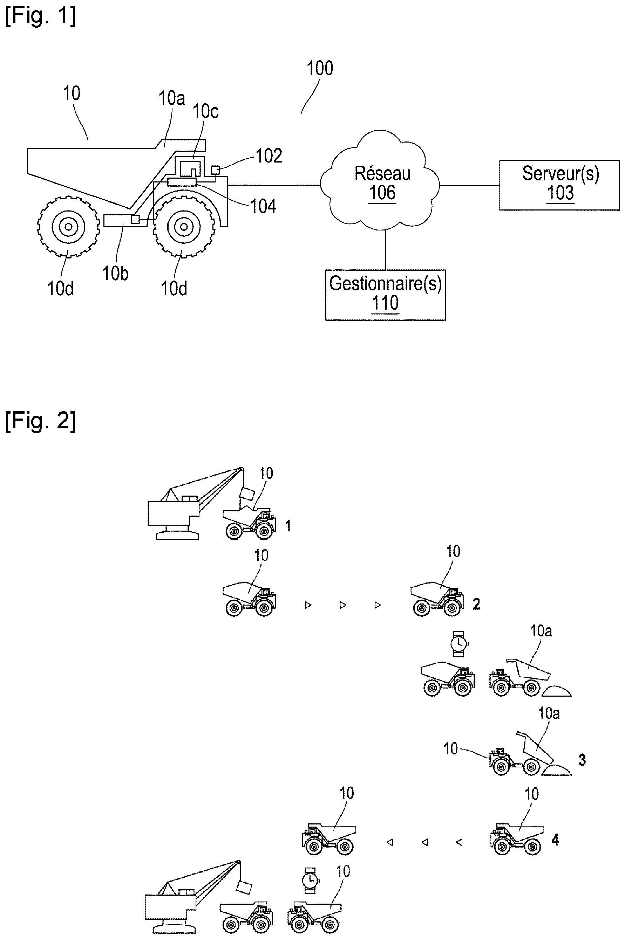

En se référant à la figure 1, un camion de transport (ou « camion ») 10 est représenté qui transporte de charges lourdes sur des parcours aménagés. A titre d'exemple, le camion 10, qui sert aux sites miniers, est du type « dumper » qui inclut une benne 10a montée de manière pivotante sur un châssis 10b (par exemple, par moyens hydrauliques et/ou pneumatiques). La benne 10a pourrait être d'un autre type connu, par exemple, de type éjecteur, de type à déversement latéral ou de type à déversement par le bas. Ce type de véhicule est utilisé souvent dans les mines à ciel ouvert comportant une piste permettant, par exemple, au véhicule de descendre à vide et de remonter chargé du minerai extrait sur le front de taille et formant la charge utile.

Le camion 10 répète un cycle de travail de ce type (comme utilisé ici, le terme « cycle » fait référence à un trajet répété). En général, les opérations minières typiques impliquent des centaines de trajets pendant lesquels chaque camion de transport 10 doit passer par différents états de fonctionnement, tels que l'état de chargement, l'état de transport, l'état de déversement et l'état de regroupement pendant le transport du site de chargement au site de déversement. A titre d'exemple, un cycle effectué par un ou plusieurs camions 10 peut inclure successivement un déchargement du camion 10 à un point de déchargement; une phase de roulage, déchargée, jusqu'à un point de chargement; le chargement du minerai dans le camion 10 ; une phase de roulage, chargée, jusqu'au point de déchargement ; et un déchargement du camion 10 au point de déchargement (qui recommence également le cycle à suivre).

Afin de vérifier l'état d'avancement du travail et/ou l'efficacité du fonctionnement d'un véhicule minier, il est entendu que la détection des cycles miniers est un sujet pertinent pour les gestionnaires de véhicules miniers (y compris sans limitation, des compagnies flottes à laquelle appartient le ou les véhicules miniers, des producteurs miniers et des fabricants de véhicules miniers). Cette détection est souvent réalisée à partir de technologies de détection de vibrations (par exemple, des accéléromètres positionnés sur le véhicule minier) qui sont associées à des capteurs de position et/ou de vitesse du véhicule minier (par exemple, par moyens d'un système de positionnement global GPS, d'un système de navigation inertielle et/ou d'autres moyens de localisation équivalents). A titre d'exemple, le brevet US9,792,739 divulgue un système et procédé pour la détection des différentes phases d'un cycle minier en combinant les données d'une centrale inertielle (accéléromètre et rotation) et la position GPS d'un véhicule minier. Aussi, le brevet US9,302,859 divulgue un système dans lequel un capteur de la vitesse du véhicule minier est rajouté pour augmenter la robustesse de la détection des phases du cycle minier. En outre, le brevet US10,308,157 divulgue un système de surveillance dans lequel un seul capteur, comprenant un accéléromètre positionné dessous la benne d'un dumper est employé pour déduire les différentes phases du cycle minier à partir de l'analyse des accélérations verticales. Le brevet US7,395,184 divulgue un procédé de détermination des cycles miniers à partir de la mesure continue des variations de charge d'un dumper (estimée à partir de la pression d'huile dans les suspensions). Le document US2015020609 divulgue un système de détection de charge destiné à une machine (par exemple, un camion de chantier) qui exploite un microphone pour enregistrer un signal audio continu, le filtre, le compare à des modèles audio prédéfinis d'entrée ou de sortie de matière, et produit un événement de données dès que le score de similarité dépasse un seuil, indiquant ainsi le chargement ou le déchargement du matériau.

Malgré l'incorporation de ces solutions dans l'industrie, l'art antérieur ne comprend aucune divulgation d'un moyen acoustique pour détecter les cycles miniers. A partir de l'enregistrement acoustique du roulage d'un véhicule minier, on pourrait déduire les étapes clés des cycles de camions miniers, avec chaque étape du cycle étant décrite comme une « scène » ou une « phase » acoustique particulière. Chaque scène acoustique est elle-même constituée d'un certains nombres d'évènements acoustiques unitaires spécifiques, agencés dans un certain ordre chronologique. Une fois enregistrés, ces évènements peuvent alors être détectés automatiquement par un traitement du signal spécifique à chaque type d'évènement. Les phases principales du cycle minier peuvent être caractérisées par un ou plusieurs

évènements acoustiques, l'ensemble de ces évènements formant une scène acoustique. Ainsi, l'invention divulguée emploie l'acoustique en relation avec les opérations minières, où une mesure du temps passé à effectuer certains processus (tels que le chargement et le déchargement d'un véhicule minier) est un élément d'information important qui peut être utilisé pour étudier et potentiellement augmenter la productivité et l'efficacité de l'opération minière.

## Résumé de l'invention

L'invention concerne un système selon la revendication 1, installable dans un camion minier qui inclut une benne montée de manière pivotante sur un châssis, une cabine où un opérateur du camion minier s'installe, et un moteur associé avec le châssis, le système mettant en œuvre un procédé permettant la détection des événements acoustiques dénotant des phases d'un cycle du camion minier, caractérisé en ce que le système comprend :

- au moins un dispositif acoustique qui capture un événement acoustique associé avec une phase d'un cycle du camion minier et qui génère un ou des signaux indicatifs de l'événement acoustique capturé, dans lequel chaque phase est constituée d'un nombre d'évènements acoustiques unitaires spécifiques et agencés dans un ordre chronologique prédéterminé, le dispositif acoustique comprenant :
- au moins un microphone qui détecte et qui capture les événements acoustiques associés avec chaque phase du cycle minier, le microphone étant embarqué sur ou dans le camion minier ; et
- un dispositif d'enregistrement acoustique associé avec le microphone qui enregistre les évènements acoustiques capturés par le microphone ;
- au moins une mémoire configurée pour stocker une application d'analyse des signaux générés par le dispositif acoustique et représentatifs des phases réalisées par la camion minier auxquelles les événements acoustiques capturés sont associés ;
- un ou des serveurs de communication comprenant chacun au moins un ou des processeurs connectés de manière opérationnelle à la mémoire, le ou les processeurs comprenant un module d'exécution de l'application d'analyse qui réalise le traitement des signaux indicatifs des événements acoustiques pour déterminer la présence et/ou l'absence des bruits particuliers et/ou leur fréquence et leur durée, dans lequel le ou les processeurs sont capables d'exécuter des instructions programmées stockées dans la mémoire pour réaliser les étapes suivantes :

  - une étape d'opération du système pendant laquelle le dispositif acoustique capture un ou des événements acoustiques en temps réel et génèrent un ou des signaux indicatifs de chaque événement acoustique capturé ;
  - une étape de l'envoie du ou des signaux au serveur réalisée par le dispositif acoustique ;
  - une étape de filtrage et d'analyse des signaux envoyés réalisée par le processeur du serveur recevant les signaux ; et
  - une étape de construction d'un graphique de cycles sonores représentant des corrélations temporelles entre les événements acoustiques analysés et un ordre chronologique attendu d'une ou des phases associées, pendant laquelle le processeur peut comparer le graphique construit avec un ou plusieurs graphiques prédéfinis, chacune d'entre eux étant indicatif des événements acoustiques unitaires spécifiques et agencés et les phases dont ils sont associés ;

de sorte que chaque évènement acoustique se caractérise par une signature acoustique permettant d'identifier des périodes de chargement et de déchargement et des périodes de roulage en charge et à vide à partir de l'amplitude et de la fréquence des enregistrements. Dans un mode de réalisation du système de l'invention, les phases du cycle minier dont les événements acoustiques associés sont détectés et enregistrés comprennent :

- une phase de chargement du minerai dans la benne du camion minier à l'arrêt dans une zone de chargement;
- une phase de roulage chargée du camion minier ;
- une phase de déchargement du minerai avec le camion minier 10 à l'arrêt à une zone de déchargement;
- une phase de roulage à vide du camion minier ; et
- à la fin du cycle, une phase d'attente de chargement avec le camion minier à l'arrêt . Dans un mode de réalisation du système de l'invention, la signature acoustique de chaque évènement acoustique est classée entre deux types de bruits comprenant :

  - un bruit blanc associé avec au moins un bruit parmi un bruit du moteur, un bruit ralentisseur et/ou un bruit minerai ; et
  - un bruit harmonique associé avec au moins un bruit parmi un régime moteur, un klaxon, un son de recul et une résonance de la benne.

Dans un mode de réalisation du système de l'invention, le dispositif d'enregistrement acoustique comprend un moyen de détection d'accélération monté sur ou dans le camion minier de manière à pouvoir détecter le choc du chargement et/ou du déchargement du camion.

Dans un mode de réalisation du système de l'invention, le système comprend en outre au moins un système télématique pour permettre la surveillance et l'enregistrement de données opérationnelles du camion minier.

Dans un mode de réalisation du système de l'invention, le système comprend en outre un moyen de localisation monté sur ou dans le camion minier choisi parmi un système de positionnement global GPS et un système de navigation inertielle.

Dans un mode de réalisation du système de l'invention, le système comprend en outre un réseau de communication qui gère les données entrantes au système, le réseau de communication incorporant au moins un serveur de communication avec au moins un processeur qui gère les données correspondant à un camion minier identifié.

Dans un mode de réalisation du système de l'invention, le serveur est associé à un ou plusieurs gestionnaires de camions miniers, y compris un ou des producteurs miniers auxquels appartient le camion minier.

L'invention concerne aussi un procédé selon la revendication 9, permettant la détection des événements acoustiques liés aux phases d'un cycle du camion minier, le procédé mis en œuvre par un système installable dans un camion minier, caractérisé en ce que le procédé comprend les étapes suivantes :

- une étape d'opération du système pendant laquelle un dispositif acoustique du système capture un ou des événement acoustiques en temps réel et génèrent un ou des signaux indicatifs de chaque événement acoustique capturé ;
- une étape de l'envoie du ou des signaux à un serveur du système réalisée par le dispositif acoustique ;
- une étape de filtrage et d'analyse des signaux envoyés pour déterminer la présence et/ou l'absence des bruits particuliers et/ou leur fréquence et leur durée, cette étape étant réalisée par un processeur du serveur recevant les signaux ; et
- une étape de construction d'un graphique de cycles sonores représentant des corrélations temporelles entre les événements acoustiques analysés et un ordre chronologique attendu d'une ou des phases associées, pendant laquelle le processeur peut comparer le graphique construit avec un ou plusieurs graphiques prédéfinis, chacune d'entre eux étant indicatif des événements acoustiques unitaires spécifiques et agencés et les phases dont ils sont associés ;

de sorte que chaque évènement acoustique se caractérise par une signature acoustique permettant d'identifier des périodes de chargement et de déchargement et des périodes de roulage en charge et à vide à partir de l'amplitude et de la fréquence des enregistrements. Dans un mode de réalisation du procédé de l'invention, le procédé comprend en outre une méthode de traitement d'un signal acoustique de type bruit blanc large bande, associé avec au moins un bruit parmi un bruit du moteur, un bruit ralentisseur et/ou un bruit minerai, cette étape comprenant les étapes suivantes :

- une étape de filtrage du signal dans la bande fréquentielle correspondante ;
- une étape de décimation afin de limiter la charge de calcul ;
- une étape de calcul d'un niveau sonore moyen du signal filtré Root Mean Square (RMS) ; et
- une étape de comparaison du niveau sonore moyen calculé par rapport à un seuil prédéterminé.

Dans un mode de réalisation du procédé de l'invention, le procédé comprend en outre une étape de traitement d'un signal acoustique de type bruit blanc large bande, associé avec au moins un bruit parmi un bruit du moteur, un bruit ralentisseur et/ou un bruit minerai, cette étape comprenant les étapes suivantes :

- une étape de calcul du spectre fréquentiel sur une fenêtre glissante du signal temporel ; et
- une étape de déduction de la puissance acoustique par intégration dans la bande fréquentielle voulue.

Dans un mode de réalisation du procédé de l'invention, le procédé comprend en outre une étape de traitement d'un signal acoustique de type bruit harmonique, associé avec au moins un bruit parmi un régime moteur, un klaxon, un son de recul et une résonance de la benne, cette étape comprenant les étapes suivantes :

- une étape de filtrage du signal dans la bande fréquentielle correspondante ;
- une étape de décimation du signal brut ; et
- une étape de détection des harmoniques du signal net.

Dans un mode de réalisation du procédé de l'invention, l'étape de détection des harmoniques du signal est

réalisée par une méthode choisie parmi des méthodes du type filtre en peigne, analyse cepstrale, autocorrélation spectrale et moyenne synchrone.

Dans un mode de réalisation du procédé de l'invention, le procédé comprend en outre une étape d'identification d'emplacements prévus pour le camion minier, dans laquelle l'identification comprend l'identification de coordonnées de chaque emplacement prévu en utilisant des données obtenues par un moyen de localisation monté sur ou dans le camion minier.

L'invention concerne aussi un camion minier, selon la revendication 15.

D'autres aspects de l'invention vont devenir évidents grâce à la description détaillée suivante.

## Brève description des dessins

La nature et les divers avantages de l'invention vont devenir plus évidents à la lecture de la description détaillée qui suit, conjointement avec les dessins annexés, sur lesquels les mêmes numéros de référence désignent partout des parties identiques, et dans lesquels :

[Fig 1] La figure 1 représente une vue en perspective d'un mode de réalisation d'un camion minier ayant le système de l'invention installé.

[Fig 2] La figure 2 représente un exemple de l'ensemble de phases d'un cycle minier réalisée par le camion minier de la figure 1.

**[Fig 3] [Fig 4]** Les figures 3 et 4 représentent des exemples de scènes acoustiques définies par un analyse temps fréquence d'un signal acoustique enregistré pendant un cycle minier réalisé par le camion minier de la figure 1 (**[Fig 3]**) et pendant l'arrêt du camion minier (**[Fig 4]).**

**[Fig** 5] La figure 5 représente un spectre de raies typique d'un signal acoustique harmonique d'un moteur du camion minier à l'arrêt.

[Fig 6] La figure 6 représente un spectre de raies typique d'un signal acoustique harmonique du frein moteur du camion minier.

[Fig 7] La figure 7 représente un exemple d'une scène acoustique définie par un analyse temps fréquence d'un signal acoustique enregistré pendant une phase de chargement du camion minier.

[Fig 8] La figure 8 représente un spectre de raies typique d'un signal harmonique du bruit de chargement pendant une phase de chargement du camion minier.

[Fig 9] La figure 9 représente un spectre de raies typique d'un signal harmonique du bruit du moteur du camion minier pendant une phase de roulage en montée.

[Fig 10] La figure 10 représente un exemple d'une scène acoustique définie par un analyse temps fréquence d'un signal acoustique enregistré pendant une phase de déchargement du camion minier.

[Fig 11] La figure 11 représente des phases acoustiques d'un cycle minier réalisé par le camion minier de la figure 1.

[Fig 12] La figure 12 représente un diagramme de flux d'un mode de réalisation d'un procédé de l'invention permettant la détection des événements acoustiques liés aux phases du cycle du camion minier.

[Fig 13] La figure 13 représente un exemple d'un évolution temporelle du paramètre acoustique brut de plusieurs des évènements acoustiques détectés pendant le cycle minier.

[Fig 14] La figure 14 représente un exemple des cycles miniers sonores détectés pendant une partie du cycle minier.

**[Fig 15] [Fig 16]** Les figures 15 et 16 représentent respectivement des exemples de scènes acoustiques du chargement et du déchargement du camion minier de la figure 1.

[Fig 17] La figure 17 représente un exemple de graphique d'une chronologie acoustique des événements acoustiques enregistrés pendant le cycle minier.

## Description détaillée

En se référant maintenant aux figures, sur lesquelles les mêmes numéros identifient des éléments identiques, le camion de transport (ou « camion ») 10 de la figure 1 inclut un mode de réalisation d'un système 100 de l'invention incorporant au moins dispositif acoustique qui capture et qui enregistre un signal acoustique associé avec chaque phase d'un cycle de camion minier. Le système 100 met en œuvre un procédé de l'invention permettant la détection acoustique des événements dénotant des phases spécifiques d'un cycle de camion minier.

Il est entendu que le camion de transport 10 est donnée à titre d'exemple. Un véhicule minier employant le système 100 de l'invention pourrait être choisi parmi d'autres types de véhicules (par exemple, des chariots élévateurs, des tracteurs, etc.). Il est aussi entendu que le système 100 pourrait être mis en œuvre avec d'autres types de véhicules en dehors du métier minier (par exemple, n'importe quel véhicule qui réalise des cycles et/ou des événements industriels ou miniers répétitifs).

En se référant encore à la figure 1 et en outre à la figure 2, la figure 2 représente un exemple d'un ensemble de

phases d'un cycle minier dont des événements acoustiques associés sont détectés et enregistrés par le dispositif acoustique du système 100. Pendant le cycle minier, un certain nombre d'indicateurs d'usage (ou « analytics ») peuvent s'en déduire et peuvent être valorisés à partir de l'enregistrement acoustique du roulage du camion minier 10 (comme décrit ci-dessous). Cet enregistrement acoustique peut déduire les étapes clés des cycles de véhicules miniers, à savoir :

- Une phase (1) de chargement du minerai dans la benne 10a du camion minier 10 à l'arrêt. Lorsqu'un chargeur 20 ou une pelle (non représentée) charge le camion minier 10, il y a un bruit significatif. Ce bruit est totalement différent de celui qu'on entend lorsque le camion minier roule (soit chargé, soit à vide) et lorsque le camion minier décharge le matériel.
- Une phase (2) de roulage chargée du camion minier 10, réalisée généralement en montée vers une zone de déchargement.
- Une phase (3) de déchargement du minerai à la zone de déchargement avec le camion minier 10 à l'arrêt.
- Une phase (4) de roulage à vide du camion minier 10, généralement en redescendant vers une zone de chargement.
- A la fin du cycle, une phase d'attente de chargement avec le camion minier 10 à l'arrêt (qui recommence également le cycle suivant).

Chaque phase (ou « scène ») acoustique est elle-même constituée d'un nombre d'évènements acoustiques unitaires spécifiques, agencés dans un certain ordre chronologique. Dans un cycle minier, il existe au moins cinq évènements, à savoir :

- Fréquence du régime moteur du camion minier ;
- Ventilateur du ralentisseur ;
- Son (ou « Bip ») de recul ;
- Son du klaxon avant ; et
- Résonance de la benne sous l'effet du choc du minerai qui tombe (par exemple, pendant la phase 3 décrite ci-dessus).

Chaque évènement acoustique se caractérise par un signal harmonique ou non, par une gamme de fréquence, un niveau sonore et une durée spécifique. Une fois enregistrés, ces évènements peuvent alors être détectés automatiquement par un traitement du signal particulier à chaque type d'évènement. Un traitement des signaux concernant l'amplitude et la fréquence des enregistrements permet d'identifier et de détecter les périodes où le camion minier 10 effectue les différentes phases du cycle : chargement et déchargement, roulage en charge et à vide.

En se référant encore à la figure 1, dans un mode de réalisation du système 100, le dispositif acoustique comprend au moins un microphone 102 qui détecte et qui capture les événements acoustiques associés à chaque phase du cycle minier. Le microphone 102 est choisi parmi les microphones de qualité et robustes connus dans le marché spécialisé, et incorporant un système d'acquisition de signaux acoustiques. Le microphone 102 est embarqué sur ou dans le camion minier 10, et il est positionné de façon à capter à la fois les bruits du moteur, ceux de la benne 10a, le bruit du klaxon avant et le bruit du son (ou « bip ») de recul, tout en restant protégé des agressions et des autres bruits extérieurs. En général, le microphone 102 est positionné devant une cabine 10c du camion minier 10 où le chauffeur s'installe (comme représenté dans la figure 1). Dans un mode de réalisation du système 100, le microphone 102 est positionné derrière la cabine 10c adjacent à la benne 10a.

Le dispositif acoustique du système 100 comprend aussi un dispositif d'enregistrement acoustique 104 associé avec le microphone 102 pour enregistrer (soit en temps réel soit par traitement ultérieur) les évènements acoustiques (et donc les phases correspondantes) capturés par le microphone 102. Dans un mode de réalisation du système 100, le dispositif d'enregistrement acoustique 104 comprend un ou des enregistreurs acoustiques connus dans le commerce, y compris les enregistreurs acoustiques du type stéréo portable (par exemple, du type offert sous la marque TASCAM®). A titre d'exemple, les caractéristiques typiques d'un enregistreur acoustique choisi pour utilisation dans le système 100 peuvent inclure une résolution verticale de 24 bit (permettant une bonne sensibilité du signal) ; une fréquence d'échantillonnage de 48 kHz (permettant de capter des fréquences jusqu'à 20 kHz) ; une puissance sonore maximum de 125 dB SPL (permettant de ne pas saturer le signal dans l'environnement acoustique très bruyant d'un camion minier) ; et une autonomie sur batterie d'environs 24 heures (suffisant pour enregistrer une journée entière de travail minier). Il est entendu que des enregistreurs acoustiques équivalents pourraient être utilisés.

Dans un mode de réalisation du système 100, le dispositif d'enregistrement acoustique 104 peut comprendre un moyen de détection d'accélération, qui pourrait être un accéléromètre connu (non représenté). L'accéléromètre peut être un accéléromètre triaxial capable de mesurer l'accélération dans les trois dimensions spatiales. Les accéléromètres peuvent être des capteurs micro-électromécaniques ("MEMS") qui sont largement disponibles à un prix bas et qui restent fiables dans leur opération. En fonctionnement, l'accéléromètre détecte les chocs verticaux et horizontaux subis par le camion minier 10 (par exemple, les accélérations verticales et horizontales produites lorsque le camion minier 10 se déplace sur des surfaces en pente ascendante ou descendante, ainsi que sur des surfaces rugueuses). L'accéléromètre

peut être monté n'importe où sur ou dans le camion minier 10 de manière à pouvoir détecter le choc du chargement et/ou du déchargement du camion 10. Par exemple, l'accéléromètre peut être situé sous la benne 10a ou sur le châssis 10b du camion minier 10. Alternativement, l'accéléromètre peut être positionné dans la cabine 10c du camion 10.

Dans un mode de réalisation du système 100, le système peut comprendre au moins un système télématique connu (non représenté) pour déterminer l'état de l'utilisation du camion minier 10 et/ou un ou des pneumatiques montés sur le camion minier. Le système télématique peut être employé ensemble avec l'enregistreur acoustique 104 pour permettre la surveillance et l'enregistrement de données opérationnelles du camion minier 10. Ces données enregistrées préviennent comment et/ou où le camion minier 10 peut être utilisé dans un site minier. Cette information télématique du camion minier 10 peut comprendre, sans limitation, les éléments de données suivantes :

- Informations provenant du régime moteur du camion minier 10 (par exemple, réglage de la transmission tel que parking, conduite, vitesse, point mort, température du liquide de refroidissement, température de l'air d'admission, pression barométrique, vitesse du camion) ;
- Informations provenant de capteurs électriques (par exemple, des systèmes visuels/audios, feux de freinage, clignotants, phares, feux de détresse, feux de recul, sons de recul, feux de stationnement, essuie-glaces, portes verrouillées, benne actionnée, tension de la batterie, niveau de carburant, kilométrage, poids de l'occupant, poids du chargement) ;

- Informations provenant de l'état du camion minier (par exemple, sa vitesse, son emplacement, la distance parcourue (y compris les trajets faits par le camion minier 10 et des trajets historiques à un gestionnaire du camion minier 10), la distance relative du camion minier par rapport à d'autres camions et/ou d'autres objets) ;
- Informations concernant les horaires et/ou les dates de départ et/ou d'arrivée du camion minier 10 à un endroit prédéterminé (par exemple, une zone de chargement/déchargement) ;
- Informations calculées (par exemple, l'accélération et/ou la décélération du camion minier 10, son accélération latérale, la perte de pression de ses pneumatiques) ; et
- Identification du conducteur (par exemple, par reconnaissance vocale, code, biométrie, rétine, etc.).

Les données peuvent être recueillies à partir de sources variées, y compris, sans limitation, des applications mobiles, des capteurs installés sur le camion minier 10, des modules d'interface véhicule (ou « Vehicle Interface Module » ou « VIM », ou « Vehicle Monitoring System » ou « VMS ») et/ou par leurs combinaisons et leurs équivalents.

Dans les modes de réalisation du système 100 permettant l'enregistrement à distance, le système 100 comprend un réseau de communication (ou « réseau ») 106 qui gère les données entrantes au système 100 des sources variées (par exemple, à partir d'un système télématique). Le réseau de communication 106 incorpore au moins un serveur de communication (ou « serveur ») 108 avec au moins un processeur qui gère les données correspondant à un camion minier identifié. Le camion minier identifié peut avoir un ou des pneumatiques 10d (voir la figure 1) incorporant un ou plusieurs capteurs connus pour générer ou capturer des données, telles que les données correspondant à un environnement opérationnel du camion minier identifié. Les capteurs peuvent inclure un ensemble de capteurs pour fournir des données concernant les caractéristiques de fonctionnement d'un ou des pneumatiques identifiés. Les capteurs peuvent inclure, par exemple, un ou des capteurs de vitesse, un ou des capteurs d'accélération, un ou des capteurs liés à la traction, un ou des capteurs liés au freinage, et/ou une combinaison de capteurs pour recueillir des données concernant un ou des aspects de la situation dynamique d'un pneumatique identifié. Les capteurs peuvent aussi fournir des données stockées concernant l'identification d'un pneumatique identifié (y compris, sans limitation, sa provenance de production, distribution et/ou stockage, sa date de production, son histoire de rechapage si applicable et sa position et son histoire de montage).

Le serveur peut être associé à un ou plusieurs gestionnaires 110 de camions miniers, y compris sans limitation, une ou des compagnies flottes à laquelle appartient le ou les camions miniers et/ou un ou des producteurs miniers. Les données correspondantes peuvent être générées et/ou gérées, au moins en partie, par un ou des sites servis par un ou plusieurs camions miniers (ou par un ou des réseaux de sites dont un site spécifique fait partie).

Dans un mode de réalisation du système 100, le système peut comprendre un moyen de localisation monté sur ou dans le camion minier 10. Le moyen de localisation peut détecter la position du camion minier 10 par diverses techniques connues dans l'art, y compris par moyens d'un système de positionnement global GPS, d'un système de navigation inertielle et/ou d'autres moyens de localisation équivalents. Les données obtenues par le moyen de localisation incluent données qui correspondent à chaque trajet du camion minier 10 (par exemple, un trajet fait entre la zone de chargement et la zone de déchargement). Il est entendu qu'un trajet pourrait inclure un trajet aller simple ou un ou plusieurs trajets allers-retours. Les données obtenues par le moyen de localisation peuvent être transmises par le réseau 106 au serveur 108 afin de consolider et traiter ces données.

Un procédé de l'invention réalisé par ce mode de réalisation du système 100 peut inclure une étape d'identification d'emplacements prévus pour le camion minier 10 (par exemple, les zones de chargement et de déchargement). L'identification comprend l'identification de coordonnées de chaque emplacement prévu (des zones spécifiquement), en

utilisant des données GPS historiques obtenues et enregistrées (par exemple, enregistrées dans une ou des bases de données). Il est entendu que les enregistrements GPS peuvent être mises en combinaison avec des scènes acoustiques enregistrées par le dispositif d'enregistrement acoustique 104 pour déterminer une ou des positions spécifiques du camion minier (par exemple, les coordonnées des points de déversement, de déchargement et d'autres locations clés dans l'opération du camion minier 10). Il est également entendu que d'images (par exemples, des images satellites et/ou des images obtenues par une ou des caméras montées sur ou dans le camion minier 10) pourrait être utilisées pour vérifier les coordonnées des positions spécifiques. Dans tous les modes de réalisation du système 100, les données obtenues pourraient provenir d'un vaste ensemble de camions miniers en fonctionnement normal avec différents opérateurs et/ou gestionnaires.

Le système 100 comprend au moins un processeur qui est connecté de manière opérationnelle à une mémoire configurée pour stocker une application d'analyse des données représentatives des scènes acoustiques réalisées par la camion minier 10. Le terme « processeur » (ou, alternativement, le terme "circuit logique programmable") désigne un ou plusieurs dispositifs capables de traiter et d'analyser des données et comprenant un ou plusieurs logiciels pour leur traitement (par exemple, un ou plusieurs circuits intégrés connus par l'homme de métier comme étant inclus dans un ordinateur, un ou plusieurs contrôleurs, un ou plusieurs microcontrôleurs, un ou plusieurs micro-ordinateurs, un ou plusieurs automates programmables (ou « PLC »), un ou plusieurs circuits intégrés spécifiques à une application, un ou plusieurs réseaux de neurones, et/ou un ou plusieurs autres circuits programmables équivalents connus). Le processeur comprend un ou des logiciels pour le traitement des données capturées par des sous-systèmes associés avec le système 100 (et les données correspondantes obtenues) ainsi qu'un ou des logiciels pour l'identification et la localisation des variances et l'identification de leurs sources pour les corriger.

Dans le système 100, la mémoire peut comprendre à la fois des dispositifs de mémoire volatiles et non volatiles. La mémoire non volatile peut comprendre des mémoires à l'état solide, telles que la mémoire flash NAND, des supports de stockage magnétiques et optiques, ou tout autre dispositif de stockage de données approprié qui conserve les données lorsque le système 100 est désactivé ou perd son alimentation électrique. La mémoire volatile peut comprendre une mémoire statique et dynamique RAM qui stocke des instructions de programme et des données, y compris une application d'apprentissage.

## EXEMPLE 1

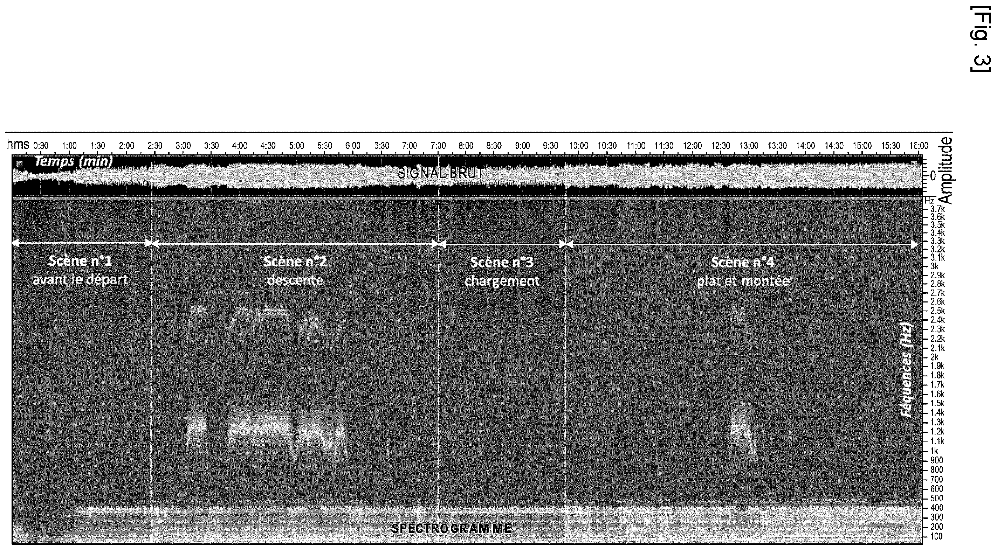

En se référant encore aux figures 1 et 2, et en outre aux figures 3 à 10, la figure 3 représente un exemple d'une scène acoustique définie par un analyse temps fréquence (ou "spectrogramme") d'un signal acoustique de 16 minutes enregistré dans une mine de cuivre. Le signal a été enregistré avec un microphone 102 positionné sur la face avant du camion minier 10. On y distingue nettement cinq (5) scènes acoustiques différentes correspondant aux phases suivantes d'un cycle minier :

- Scène no. 1 : « avant le départ » ;
- Scène no. 2 : « roulage en descente » ;
- Scène no. 3 : « chargement du minerai » ;
- Scène no. 4 ; « roulage sur sol plat et montée » ; et
- Scène no. 5 : « déchargement du minerai ».

Scène no. 1 : « avant le départ »

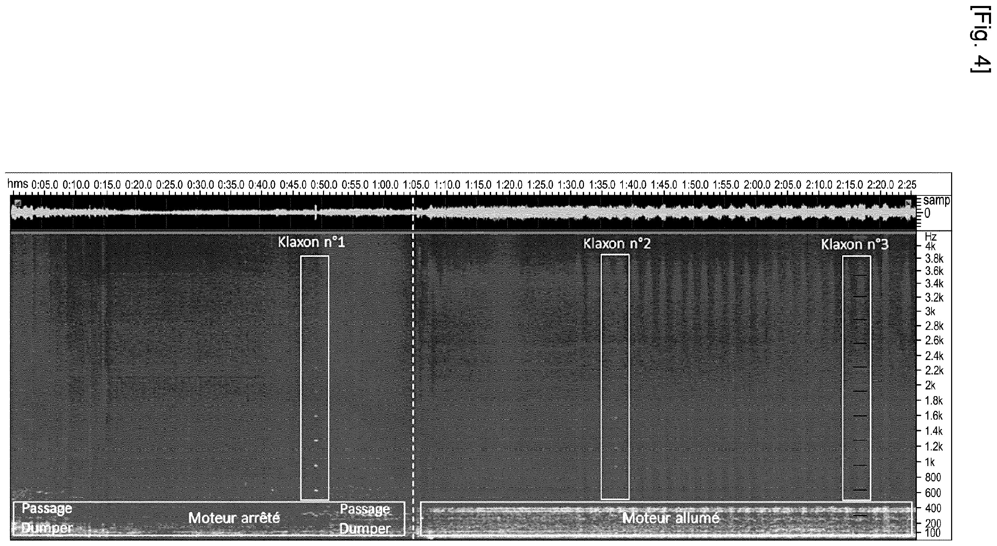

En se référant à la figure 4, cette figure représente un spectrogramme du camion minier 10 à l'arrêt. Pendant une période de 2 minutes 25 secondes (2'25'') de l'enregistrement du signal acoustique, on entend les évènements acoustiques suivants :

- Le bruit de passage d'autres camions miniers ;
- Des coups de klaxons ;
- Des voix humaines ; et/ou
- Le démarrage du moteur du camion minier 10 et le bruit de son ralenti.

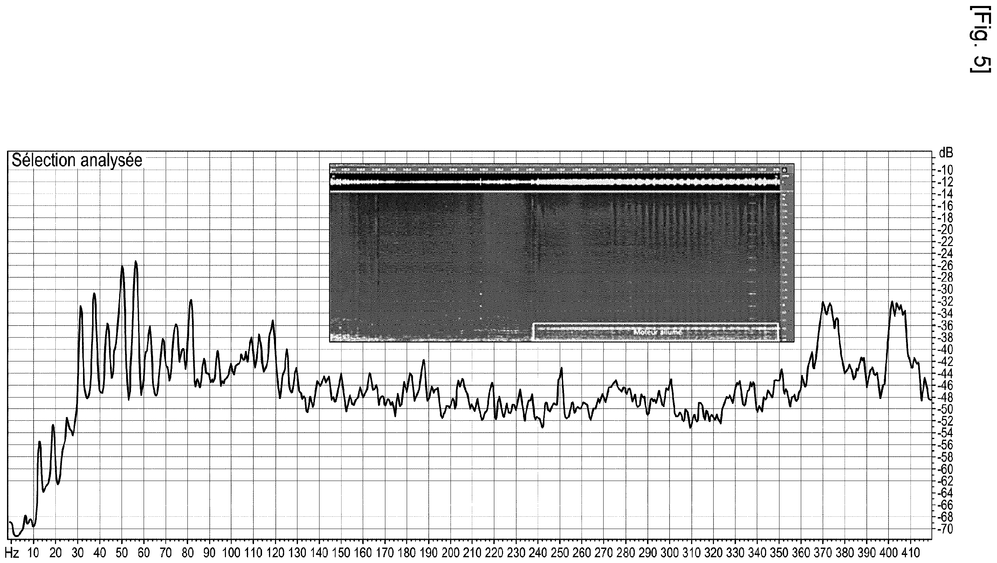

Tous ces évènements ont une signature acoustique spécifique. En particulier, on observe une signature basse fréquence du bruit du moteur du camion minier 10 dans la zone fréquentielle 0 - 400 Hz. En se référant à la figure 5, si on étudie le spectre fréquentiel 0 - 400 Hz de ce moteur allumé à l'arrêt, on observe un spectre de raies typique d'un signal harmonique dont les caractéristiques sont les suivantes :

- Fréquence fondamentale F0 = 7 Hz (moteur au ralenti) ;

- Nombre d'harmoniques : ~15 ;
- Étendue fréquentielle : 0 à 100 Hz ; et
- Niveau sonore : + 25 dB au-dessus du bruit moyen.

A partir du pas fréquentiel du spectre de raies, on peut déduire le régime moteur.
Les coups de klaxons ont aussi une signature harmonique, mais à plus haute fréquence.

Scène no. 2 : « pendant la descente »

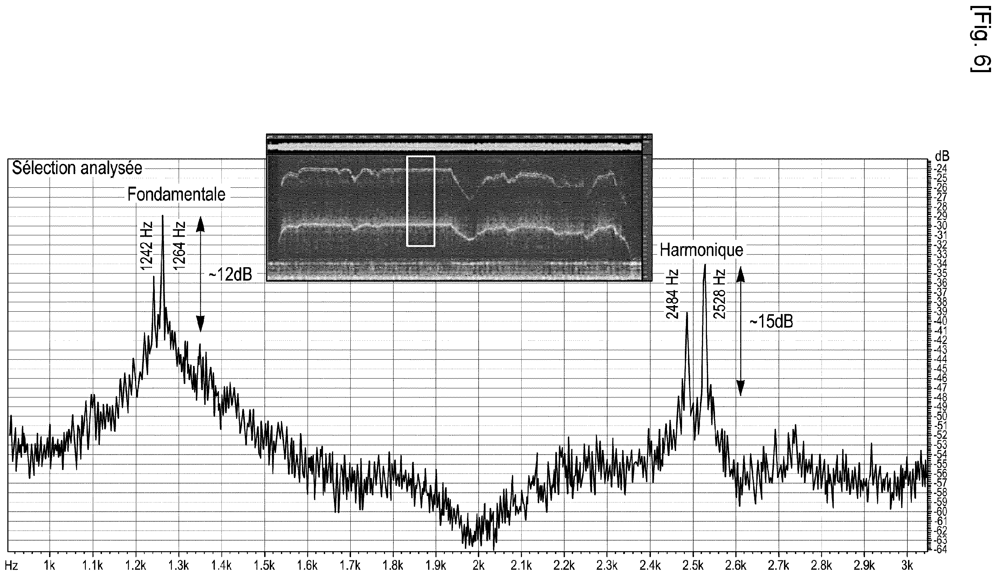

En se référant à la figure 6, qui représente le spectre du bruit du frein moteur, le bruit le plus significatif pendant la descente est un bruit aigu constant pendant toute la descente. Ce bruit est a priori généré par le ventilateur du ralentisseur automatique (ou « frein moteur ») disponible sur les camions miniers du type dumper, qui maintient une vitesse constante à bas régime de moteur. Ce bruit du frein moteur se caractérise par les caractéristiques suivantes :

- Une fréquence fondamentale autour de 1250 Hz, d'une amplitude d'environ 12 dB ; et
- Une seule harmonique autour de 2500 Hz, d'une amplitude de 15 dB.

On constate que cette fréquence varie au cours d'une période de descente de 2 minutes 07 secondes (très probablement car la pente de la route n'est pas constante et que le freinage se régule de façon à garder la vitesse constante du camion minier quel que soit sa pente). En effet, on constate aussi que le bruit du moteur basse fréquence, et donc son régime, reste constant tout au long de la descente.

Scène no. 3 : « Chargement du minerai »

Les évènements acoustiques détectés au niveau du chargement du minerai sont de deux types :

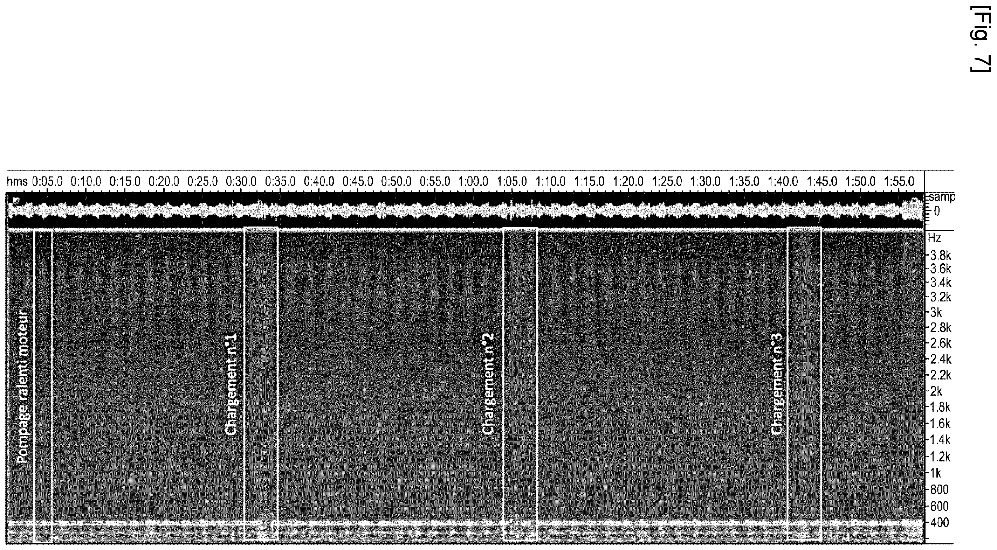

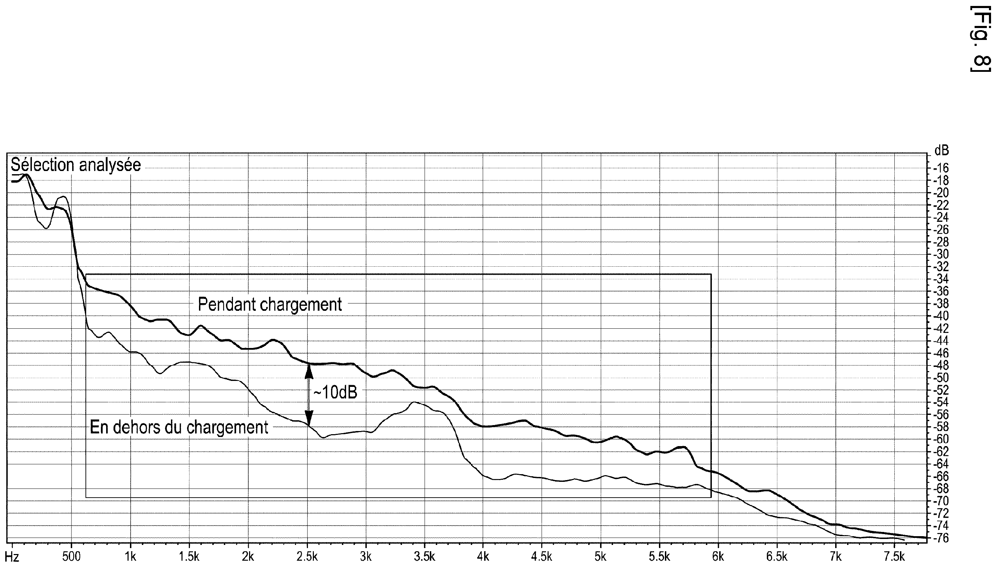

- Un fort bruit continu basse fréquence du ralenti du moteur, associé à un pompage régulier (période ~2 s) large bande, le camion minier 10 étant à l'arrêt (voir la figure 7 qui représente un spectrogramme général correspondant) ; et
- Un bruit de chargement du minerai court (< 5 s) et très large bande (600 - 6 000 Hz), d'un niveau sonore de 10 dB au-dessus du niveau sans chargement et qui se répète trois (3) fois toutes les 35 s environ (voir la figure 8 qui représente un spectre correspondant au bruit pendant une phase de chargement). Dans cet exemple, la durée totale de période du chargement est de 1 minute 55 secondes.

Scène no. 4 : « Roulage en montée »

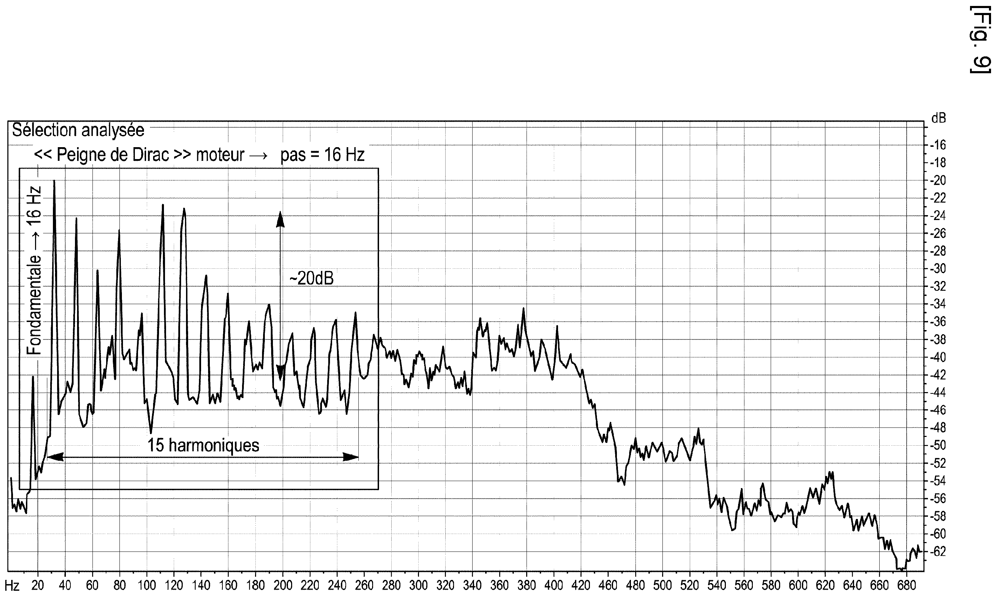

En se référant à la figure 9, qui représente un spectre de raies du bruit du moteur pendant une phase de roulage en montée, l'évènement acoustique le plus marquant est encore une fois le bruit du moteur (caractérisé par son spectre de raies basse fréquence dont la fréquence fondamentale est dépendant du régime moteur et donc de la vitesse). Pendant cette phase, le spectre de raie moyen du bruit du moteur a un pas de 16 Hz, correspondant donc au plein régime moteur. Au passage on constate que le bruit haut de fréquence, détecté en descente et attribué au frein moteur, n'existe plus.

Scène no. 5 : « Déchargement du minerai »

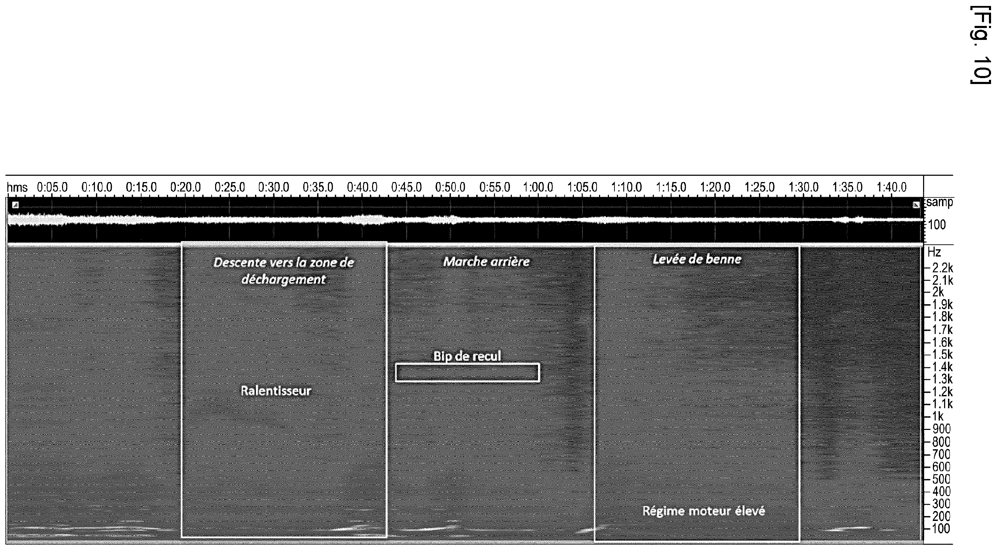

En analysant la périodicité des cycles, la scène acoustique de déchargement est découverte après la phase de montée, et elle est caractérisée par un haut régime moteur (voir la figure 10, qui représente un spectrogramme du bruit de déchargement). Cette phase commence par un son (ou « bip ») de recul mais suivi d'aucun coup klaxon, que cela soit au début ou la fin du déchargement. Le bruit de glissement du minerai dans la benne 10a qui se vide est à la limite de l'audible (très probablement en raison du positionnement du microphone 10a). En revanche, on entend bien le régime moteur qui augmente pour apporter l'énergie nécessaire importante au lever de benne 10a. Enfin, il semble que la zone de déchargement soit légèrement en contrebas car on détecte, avant le bip de recul, le bruit du ralentisseur pendant environ 10 s.
Ainsi, les différentes phases d'un cycle minier se caractérisent par des évènements acoustiques bien distincts, qu'on peut classer en cinq (5) types (voir tableau 1 ci-dessous).

[Tableau 1]

| propriétés / évènement | Type de bruit | Fréquence fondamentale F0 | Nombre d'harmoniques | Domaine fréquentiel | Niveau sonore | Durée |
|---|---|---|---|---|---|---|
| **Moteur** | harmonique | 5 – 20 Hz augmente avec le régime moteur | ~15 | < 200 Hz | augmente avec le régime moteur | variable |
| **Ralentisseur** | harmonique | 800 - 1300 Hz augmente avec l'intensité du freinage | 2 | 800 - 3000 Hz | augmente avec l'intensité de freinage | variable, ~minutes |
| **Bip de recul** | mono-fréquentiel alternatif | 1340 Hz | 0 | 1320 – 1360 Hz | Fort | ~20 s |
| **Klaxon avant** | harmonique | Autour de 160 Hz ( dépendant du type de dumper) | 20 | > 400 Hz | Fort | ~2 s |
| **Benne** | bruit "blanc" | NA | NA | < 20 Hz | Moyen | ~2 s |

Il est entendu que ce nombre d'événements acoustiques n'est pas limitatif.

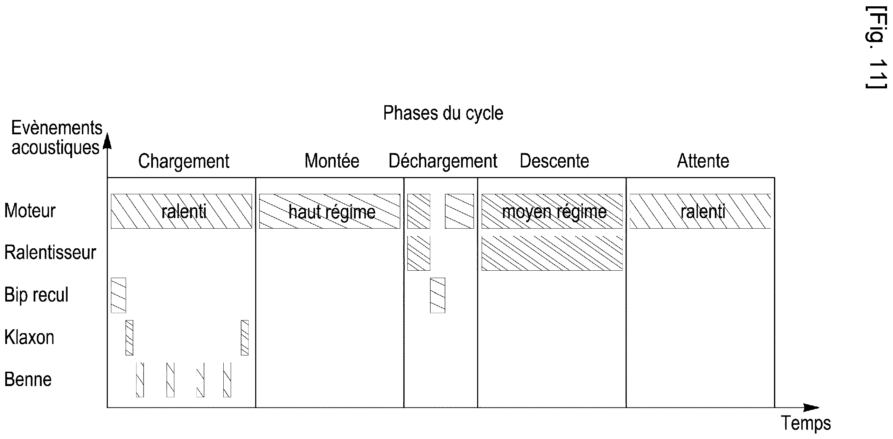

En se référant au Tableau 1 ci-dessus, et se référant maintenant en outre à la figure 11, qui représente des phases acoustiques d'un cycle minier (et le régime du moteur correspondant), les zones de chargement peuvent être identifiées quasiment systématiquement par une scène acoustique constituée des évènements acoustiques successifs suivants :

- Son (ou « bip ») de recul ;
- Moteur au ralenti ;
- Klaxon avant pour signaler le début de la phase de chargement/déchargement de minerai ;
- Bruit de « résonance » de la benne (initié par le minerai qui tombe dans la benne, en plusieurs fois, à raison d'une minute en moyenne entre chaque chargement/déchargement) ; et
- Klaxon avant pour signaler la fin du chargement/déchargement.

Ces zones de chargements sont en général précédées d'une phase d'attente, avec le camion minier 10 à l'arrêt et le moteur tournant au ralenti. Les zones de déchargement se distinguent, quant à elles, par un bip de recul ; un moteur à plein régime quand la benne 10a monte ; et/ou l'absence de coups de klaxon.

Il est maintenant entendu qu'une analyse temps-fréquence représentée par un spectrogramme est un moyen efficace pour détecter les différents évènements acoustiques. Cependant dès que la durée des enregistrements devient trop longue, ou le nombre de camions miniers à suivre trop important, il est préférable d'envisager une détection automatique, voire en temps réel, des phases des cycles miniers. Elle commence par la détection des différents évènements acoustiques mentionnés.

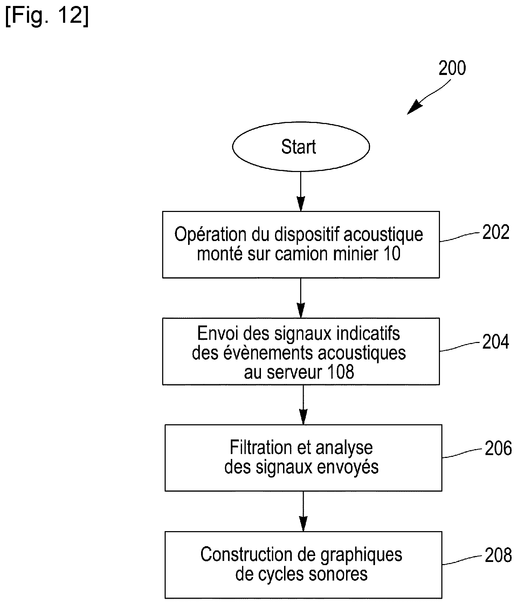

En se référant encore aux figures 1 à 11, et en outre à la figure 12, la figure 12 représente un diagramme de flux d'un mode de réalisation d'un procédé 200 de l'invention. Le procédé 200, mis en œuvre par le système 100, permet la détection acoustique des événements dénotant des phases spécifiques d'un cycle de camion minier. Le procédé 200 est mis en œuvre par ordinateur (par exemple, par le processeur du serveur 108) pour que le système 100 puisse identifier la phase actuelle d'un cycle minier en cours à partir des événements acoustiques détectés par le système.

Tel qu'utilisé ici, le terme "procédé" ou "processus" peut comprendre une ou plusieurs étapes effectuées par au moins un système informatique comportant un ou des processeurs pour exécuter des instructions qui effectuent les étapes. Toute séquence d'étapes est donnée à titre d'exemple et ne limite pas les procédés décrits à une quelconque séquence particulière.

En démarrant le procédé 100, le procédé comprend une étape 202 d'opération du système 100, et particulièrement l'opération du dispositif acoustique du système 100 qui est monté sur ou dans le camion minier 10. Le dispositif

acoustique peut capturer l'événement acoustique en temps réel et générer un ou des signaux indicatifs de cet événement acoustique.

Dans une prochaine étape 204, le dispositif acoustique envoie le ou les signaux au serveur 108 soit en temps réel (par exemple, par le réseau 106) soit par traitement ultérieur. Les données correspondantes sont enregistrées (par exemple, dans une base de données du système 100), et elles sont mises à jour pendant la durée du procédé (soit sur une base continue soit ou sur une base intermittente).

Un processeur du serveur recevant le ou les signaux indicatifs d'un ou des événements acoustiques peut filtrer et analyser ces signaux pour déterminer la présence et/ou l'absence des bruits particuliers et/ou leur fréquence et leur durée. Pendant une étape 206 du procédé 200, le processeur utilise cette information pour filtrer et pour analyser des signaux envoyés. Le procédé comprend une dernière étape 208 de construction d'un ou des graphiques de cycles sonores représentant les corrélations temporelles entre les différents événements (et donc les transitions des phases différentes du cycle minier). Pendant cette étape 208, le processeur peut comparer le graphique construit avec une ou plusieurs graphiques prédéfinis, chacune d'entre elles étant indicative d'un événement acoustique particulier et les phases dont ils sont associés. Par exemple, comme le montre la figure 2, les phases prédéfinies peuvent inclure la phase (1) de chargement, la phase (2) de roulage chargée, la phase (3) de déchargement, la phase (4) de roulage à vide et la ou les phases d'attente avec le camion minier 10 à l'arrêt.

Le procédé (200) comprend en outre une étape de traitement d'un signal acoustique. Pendant cette étape, les évènements acoustiques répertoriés peuvent être classés en deux types de bruits :

- Bruit « blanc » large bande (ou « white noise ») : bruit moteur, voire bruit ralentisseur, bruit minerai ; et
- Bruit harmonique (ou « harmonic noise ») : régime moteur, klaxon et bip de recul, résonance de la benne.

A chacun de ces deux types de bruit correspond deux familles de méthodes de traitement du signal acoustique. Dans la méthode *bruit « blanc » large bande,* on filtre en général le signal dans la bande fréquentielle correspondante, suivi éventuellement d'une décimation afin de limiter la charge de calcul. Puis on calcule le niveau sonore moyen du signal filtré Root Mean Square (ou « RMS »), et on le compare à un seuil prédéterminé. Dans cette méthode, on parle de détection en « niveau ».

Dans un autre mode de réalisation de cette méthode (« RMS spectral »), on calcule le spectre fréquentiel sur une fenêtre glissante du signal temporel, et on en déduit la puissance acoustique par intégration dans la bande fréquentielle voulue. C'est d'ailleurs comme cela que sont calculés les spectrogrammes représentés par et décrits ci-dessus par rapport aux figures 3, 4, 7 et 10 comme exemples.

Dans la méthode *bruit harmonique,* on procède à un filtrage et une décimation éventuelle du signal brut. Puis on essaye de détecter les harmoniques du signal net par des méthodes spécifiques (par exemple, du type filtre « peigne » (ou « comb filtering »), analyse cepstrale, autocorrélation spectrale ou moyenne synchrone, et/ou des méthodes inspirées de celles utilisées dans la détection de défauts dans les machines tournantes). Dans cette méthode, on parle de détection en « fréquence ».

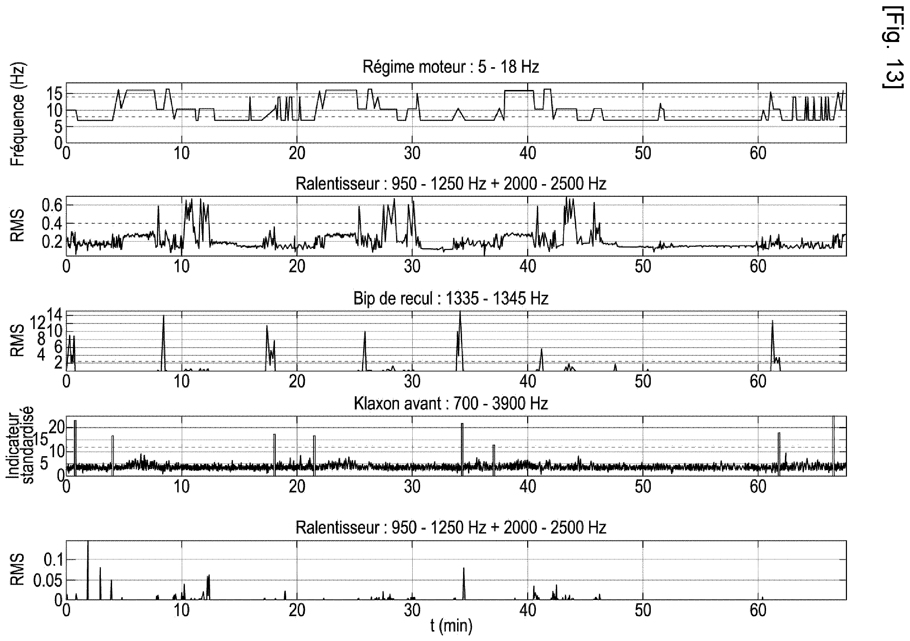

Dans le procédé 200 de l'invention, une fois les différents évènements acoustiques détectés pendant l'étape 202, on peut en déduire les différentes phases du cycle minier pendant une étape 208. Pendant cette étape, on étudie l'agencement et la cohérence dans le temps de ces évènements acoustiques détectés (comme représentées de manière schématique dans la figure 13). On peut donc dire qu'une scène acoustique est une « séquence » chronologique d'évènements acoustiques. A titre d'exemple, si deux coups de klaxons avant sont détectés sur une durée de moins de 5 mn, avec entre les deux plusieurs bruits de résonance de benne 10a, il est fort probablement que le camion minier 10 soit dans une phase de chargement du minerai. On peut aussi robustifier la détection en vérifiant que le moteur tourne au ralenti entre les deux coups de klaxon et/ou que le bip de recul est présent juste avant le premier coup de klaxon.

Pour les phases de roulage, on vérifie d'abord que le camion minier 10 n'est pas moteur arrêté ou au ralenti. Le niveau sonore du moteur doit être supérieur au seuil adéquat et/ou sa fréquence fondamentale doit être supérieure à 7 Hz. On peut alors essayer de détecter les phases de descente par le bruit du ralentisseur et les phases de plein régime du moteur qu'on peut associer à des phases de roulage en montée. La phase de chargement est caractérisée ici par la suite des évènements : légère descente ; bip de recul ; et régime de moteur élevé (correspondant au lever de la benne 10a). Enfin, on fait l'hypothèse a priori qu'une séquence chronologique type d'un cycle minier est toujours roulage/chargement/roulage/déchargement.

## EXEMPLE 2

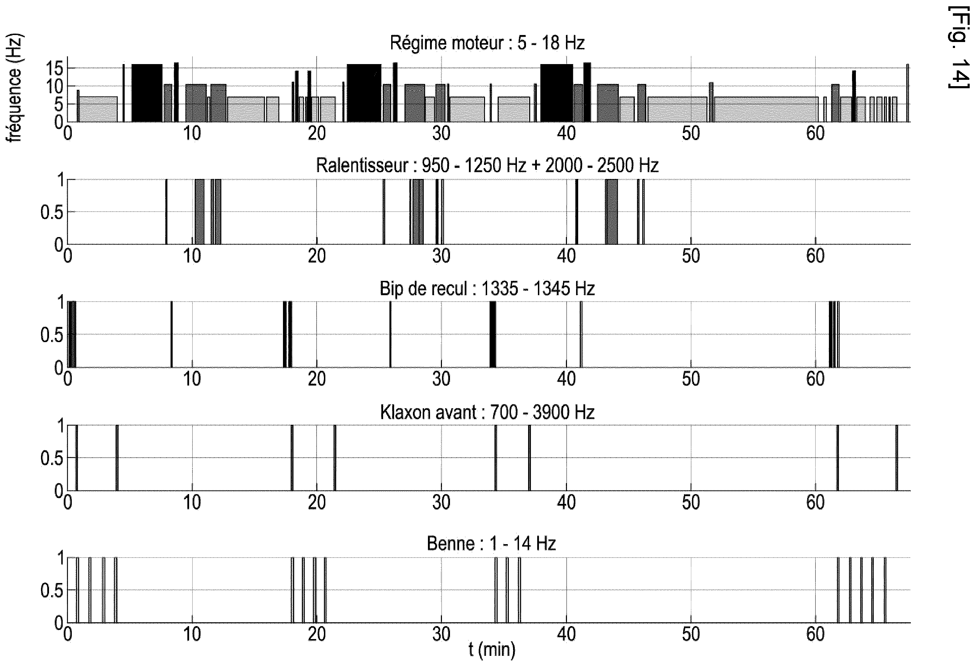

Un algorithme de détection automatique des évènements acoustiques précités a été employé sur l'enregistrement de 10 heures d'opération du camion minier 10 dans une mine de fer. En se référant aux figures 13 et 14, ces figures montrent, sur une période d'un peu plus d'une heure d'enregistrement, l'évolution des bruits du régime moteur, du ralentisseur, du bip de recul, du klaxon avant et de la benne 10a.

En se référant aux courbes de la figure 13, cette figure montre comment sont extraits les différents évènements acoustiques à partir de seuils sur les niveaux RMS ou autres indicateurs moyens du signal.

Régime moteur :

- *Description* : représentation de l'évolution temporelle de la fréquence acoustique fondamentale F0 (en Hz) du moteur dont un multiple est le régime moteur. Les segments horizontaux plus ou moins foncé représentent la valeur moyenne sur chaque séquence supposée stable.
- *Méthode* : Le signal brut a tout d'abord été décimé à une fréquence d'échantillonnage F0 de 1000 Hz. Puis pour chaque fenêtre temporelle glissante de 5 s, un algorithme spécifique d'« autocorrélation spectrale » recherche rapidement une première valeur de F0 entre 5 et 18 Hz. Enfin, un autre algorithme spécifique de « moyenne synchrone » permet d'affiner la valeur F0.
- *Classification* : Deux seuils fréquentiels auxquels sont confrontés les données sont représentés en pointillés : 8 Hz et 14 Hz. En dessous de 8 Hz, on considère que le moteur est à faible régime, voire au ralenti (la couleur des segments moyen est gris clair). Au-dessus de 14 Hz, le moteur est à plein régime (la couleur des segments est noire). Entre les deux extrêmes, le moteur est en régime intermédiaire (la couleur des segments est gris foncé).

Ralentisseur :

- *Description* : représentation de l'évolution temporelle du niveau acoustique RMS du bruit du ventilateur du ralentisseur (qui ne se déclenche qu'en descente). Les segments noirs horizontaux correspondent aux zones « stables » pertinentes (au-dessus du seuil).
- *Méthode* : Le bruit du ventilateur s'exprime spécifiquement par deux harmoniques autour de de 950 -1250 Hz pour la première et 2000 - 2500 Hz pour la deuxième. Les méthodes de détection des harmoniques s'avèrent ne pas être très efficaces, probablement car le signal évolue trop rapidement. Les signaux ont donc simplement subi deux filtrages passe-bande dans chacune des zones harmoniques. Puis un niveau acoustique moyen RMS a été évalué dans chacune des bandes par la méthode de l'enveloppe, sur une fenêtre glissante de 2 s. Les deux niveaux RMS ont alors été sommés puis normalisé par le niveau RMS global du signal complet. Le RMS final est ensuite comparé au seuil de 0.4, représenté en pointillés. Ce seuil, où le niveau sonore du ralentisseur représente 40% du niveau sonore global, s'est avéré le plus pertinent pour isoler le bruit du ralentisseur avec robustesse.

Bip de recul :

- *Description* : représentation de l'évolution temporelle du niveau acoustique RMS du bruit du bip de recul (qui se déclenche automatiquement quand le camion minier 10 roule en marche arrière). Les segments noirs horizontaux correspondent aux zones « stables » pertinentes (au-dessus du seuil).
- *Méthode* : Le bruit du bip de recul est mono-fréquentiel autour de 1335-1345 Hz. Le plus simple est de calculer le spectre sur une fenêtre glissante temporelle de 5 s, et calculer un RMS fréquentiel dans la bande 1335-1345 Hz. Une normalisation par le RMS global ne s'est pas avérée nécessaire, mais pourrait être envisagée pour plus de robustesse. Ce RMS est confronté ensuite à un seuil de $2.5 \times 10^{-7}$, représenté en pointillés. Ce seuil s'est avéré le plus pertinent pour isoler le bruit du bip de recul.

Klaxon avant :

- *Description* : représentation de l'évolution temporelle de l'indicateur normalisé du bruit du klaxon (voir la méthode décrite ci-dessous) et le seuil correspondant.
- *Méthode* : Le signal du klaxon, à l'instar de celui du moteur, est harmonique mais dans une bande de fréquence beaucoup plus haute (> 700 Hz). La méthode de l'autocorrélation spectrale sur une fenêtre glissante temporelle de 0.5 s s'est avérée être la plus efficace. Un indicateur normalisé (par rapport à l'autocorrélation spectrale d'un signal de type bruit « blanc ») est comparé ensuite à un seuil pertinent (ici 12).

Benne :

- *Description* : représentation de l'évolution temporelle du niveau RMS du bruit très basse fréquence du choc du minerai lors de son chargement dans la benne.
- *Méthode* : Ce bruit de benne s'exprime sur une très large bande spectrale. Cependant sa partie très basse fréquence (< 14 Hz) s'est avérée plus discriminante. La méthode du « RMS spectral » utilisée pour la détection du bip de recul s'est avérée toute aussi efficace pour ce bruit de benne. Le seuil de $10^{-4}$ (représenté en pointillés) s'est avéré le plus pertinent. En revanche, certains bruits d'accélération ou résonance du moteur peuvent apparaître parfois aussi à très basse fréquence. Afin de ne pas en tenir compte, le bruit de benne n'a été évalué que pendant les périodes de chargement, soit entre les deux coups de klaxon.

Maintenant en se réfère à la figure 14 qui donne du sens à l'analyse technique précédente. La figure 14 représente la même chose que la figure 13, mais elle ne représente plus que les évènements acoustiques retenus, de manière schématique, de façon à identifier plus simplement l'enchainement chronologique des différents évènements. On y a enlevé les courbes temporelles continues, les seuils, pour ne garder que les évènements pertinents (au-dessus de seuils, sauf pour le bruit du moteur) exprimés sans unité. Cela permet de simplifier l'interprétation en facilitant les corrélations temporelles entre les différents évènements.

Un certain nombre de périodicités se dégage de cette heure d'enregistrement :

- Si l'on commence par l'analyse du bruit de klaxon, on en détecte quatre (4) paires successives. La durée d'une paire est de l'ordre de 4 min, et la durée entre chaque paire est en moyenne de 20 min.
- Entre chaque paire de coups de klaxon, on détecte 3 à 4 bruits courts de benne.
- Enfin, si on analyse les évènements « bip de recul », on constate que, juste avant le début de chaque paire de klaxon, un relativement long bip de recul (~20 s) est présent.

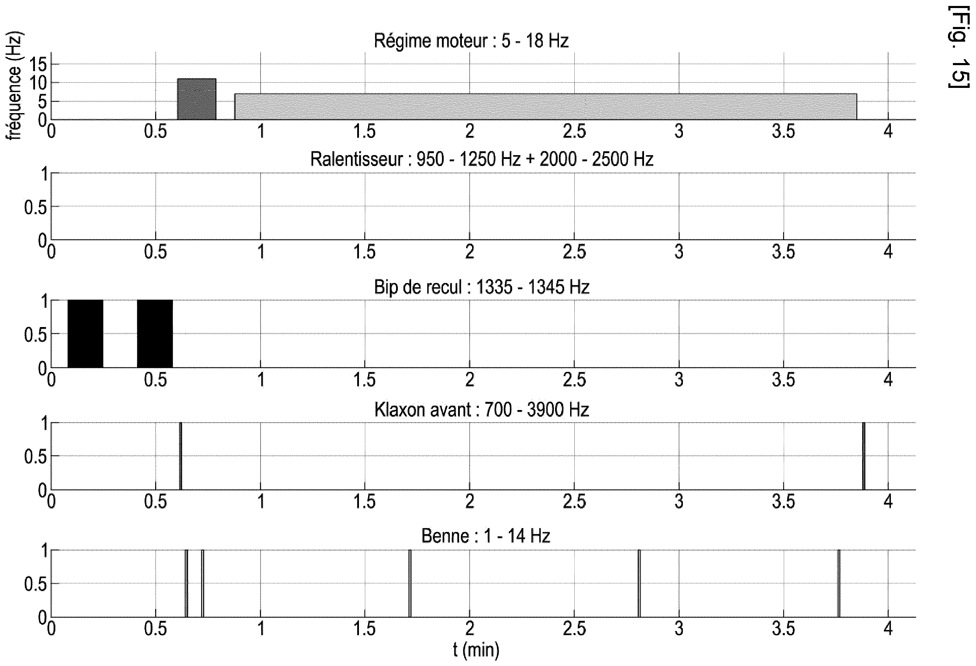

En se référant à la figure 15, il est évident que cette séquence chronologique (bip de recul / klaxon 1 /benne/ klaxon 2) comprend la « scène » (ou la « signature ») acoustique type du chargement. On constate aussi que, lors du chargement, le moteur tourne en général au ralenti (~7 Hz).

Dans cette mine de fer, la phase de chargement se fait donc suivant les étapes suivantes :

- 1. Approche à reculons du camion minier 10 vers un chargeur 20 (« bip de recul ») pendant environ 20 s.
- 2. Coup de klaxon pour alerter le chargeur 20 que le camion minier 10 est en place, à l'arrêt.
- 3. Premier chargement suivi par d'autres chargements espacés d'environ 1 min (représentant le temps que le chargeur 20 se « recharge »).
- 4. Coup de klaxon pour indiquer que la camion minier 10 est prêt à partir de la zone de chargement.

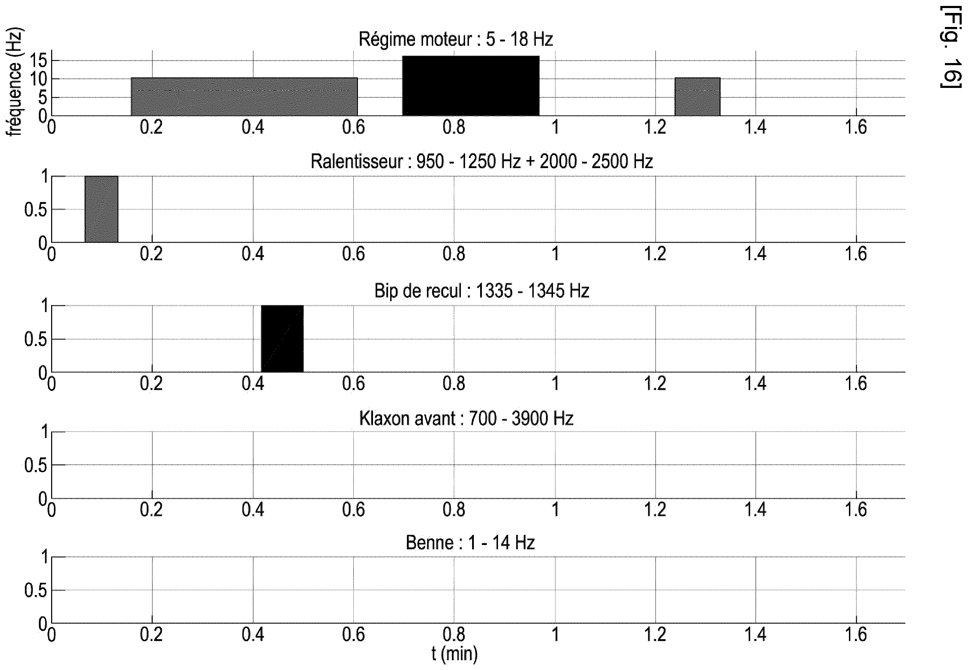

En se référant à la figure 16, en analysant la scène acoustique, il est constaté que la phase de déchargement se fait quant à elle suivant les étapes suivantes :

- 1. Approche en descente (« ralentisseur ») pendant environ 10 s vers la zone de déchargement.
- 2. Marche arrière du camion minier 10 (« bip de recul ») pendant environ 10 s pour se mettre en place.
- 3. Lever de benne 10a (« régime moteur élevé ») pendant 20 s (représentant la durée du déchargement).

Enfin, en analysant le bruit du régime moteur et du ralentisseur ensemble, on observe en effet trois (3) phases bien nettes de régime moteur. Après la fin du chargement (coup de klaxon final), chaque phase est marquée par les étapes suivantes :

- 1. D'abord, par une montée du régime moteur à son maximum pendant trois (3) min environ, correspondant à la phase de remontée du fond de la mine.
- 2. Puis, le moteur passe en régime intermédiaire en même temps que le ralentisseur se met en route. Le camion minier 10 descend vers la zone de déchargement.
- 3. La phase de déchargement vue ci-dessus commence alors.
- 4. Après cette phase, le camion minier 10 entame sa redescente dans la mine, caractérisé par le bruit du ralentisseur en régime moteur intermédiaire (une descente qui dure un peu plus de 2 min).
- 5. Le camion minier 10 arrive dans la zone de chargement, où il doit attendre son tour de chargement (cette attente étant dénotée par le moteur qui tourne au ralenti pendant plusieurs minutes).

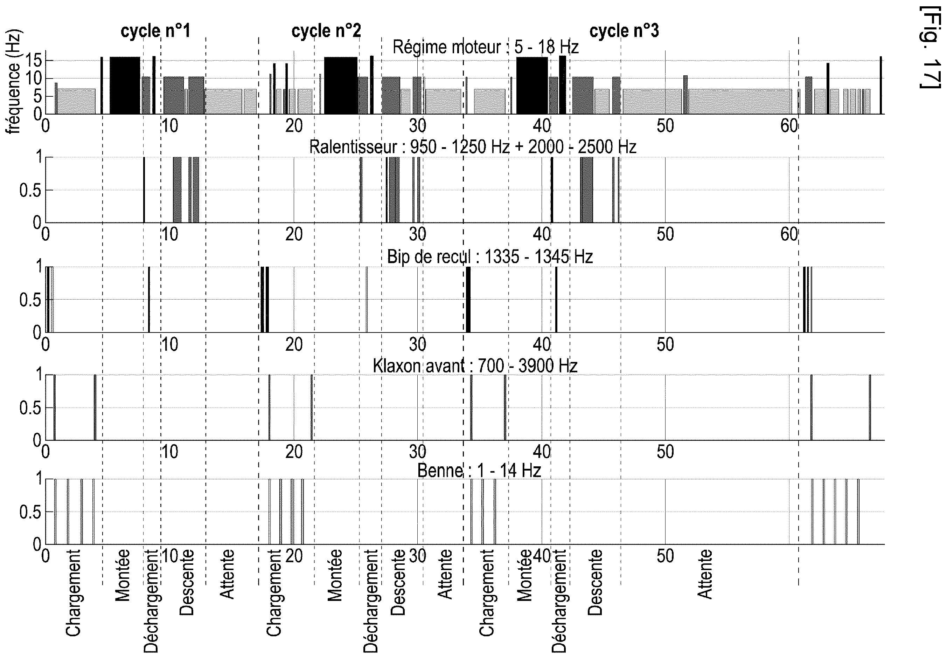

Cette interprétation de la chronologie des évènements acoustiques est représentée dans la figure 17.

Chaque charge transportée par un véhicule minier peut avoir une grande valeur, nécessitant l'efficacité des processus au sein d'une exploitation minière. L'acoustique concerne un moyen facile à implémenter, accessible, peu coûteuse, et a priori nouvelle dans le domaine minier, permettant la connaissance de l'usage d'un véhicule minier indépendamment de l'obtention des données des cycles (qui normalement appartiennent aux constructeurs des véhicules miniers). Ainsi, l'invention divulguée permet d'identifier un cycle minier type grâce à la détection et l'agencement chronologique d'évènements acoustiques particuliers en scènes acoustiques correspondant aux différentes phases du cycle minier.

Le système 100 de l'invention peut inclure des préprogrammations des informations concernant les événements attendus. Par exemple, un réglage de procédé 200 peut être associé avec les paramètres des environnements physiques typiques (par exemple, les mines) dans lesquels le système 100 fonctionne.

Dans des modes de réalisation de l'invention, le système 100 (ou un autre système incorporant le système 100) peut recevoir des commandes audios (y compris des commandes vocales) ou d'autres données audio représentant (pour exemple, une marche ou un arrêt d'une ou des étapes du procédé 200). La demande peut inclure une demande pour l'état actuel d'un cycle minier en cours. Une réponse générée peut être représentée de manière audible, visuelle, tactile (par exemple, en utilisant une interface haptique) et/ou virtuelle et/ou augmentée. Cette réponse, ensemble avec les données correspondantes, peuvent être enregistrées dans un réseau neuronal.

Il est entendu que le système 100 peut inclure plusieurs dispositifs informatiques qui réalisent divers aspects de l'apprentissage. Dans ces modes de réalisation, le processeur peut configurer le système 100 sur un ou plusieurs paramètres d'une scène acoustique et ses évènements connus. Dans ces modes de réalisation, il est entendu qu'un ou des moyens de l'apprentissage par renforcement (ou « reinforcement learning ») pourraient être employés. Pour toutes les réalisations du système 100, un système de surveillance pourrait être mis en place. Au moins une partie du système de surveillance ou de « alerting » peut être fournie dans un dispositif portable tel qu'un dispositif de réseau mobile (par exemple, un téléphone mobile, un ordinateur portable, un ou des dispositifs portables connectés au réseau (y compris des dispositifs « réalité augmentée » et/ou « réalité virtuelle », des vêtements portables connectés au réseau et/ou toutes combinaisons et/ou tous équivalents). Il est envisageable que des étapes de détection et de comparaison puissent être réalisées de manière itérative.

Les termes « au moins un(e) » et « un(e) ou plusieurs » sont utilisés de manière interchangeable. Les gammes qui sont présentées comme se situant « entre a et b » englobent les valeurs « a » et « b ».

Bien que des modes de réalisation particuliers de l'appareil révélé aient été illustrés et décrits, on comprendra que divers changements, additions et modifications peuvent être pratiqués sans s'écarter de l'esprit ni de la portée du présent exposé. Par conséquent, aucune limitation ne devrait être imposée sur la portée de l'invention décrite à l'exception de celles exposées dans les revendications annexées.

## Revendications

**1.** Système (100) installable dans un camion minier (10) qui inclut une benne (10a) montée de manière pivotante sur un châssis (10b), une cabine (10c) où un opérateur du camion minier (10) s'installe, et un moteur associé avec le châssis (10b), le système (100) mettant en œuvre un procédé (200) permettant la détection des événements acoustiques dénotant des phases d'un cycle du camion minier (10), le système (100) comprenant:

- au moins un dispositif acoustique configuré pour capturer un événement acoustique associé avec une phase d'un cycle du camion minier (10) et générer un ou des signaux indicatifs de l'événement acoustique capturé, dans lequel chaque phase est constituée d'un nombre d'évènements acoustiques unitaires spécifiques et agencés dans un ordre chronologique prédéterminé, le dispositif acoustique comprenant :
- au moins un microphone (102) configuré pour détecter et capturer les événements acoustiques associés avec chaque phase du cycle minier, le microphone (102) étant embarqué sur ou dans le camion minier (10) ; et
- un dispositif d'enregistrement acoustique (104) associé avec le microphone (102) configuré pour enregistrer les évènements acoustiques capturés par le microphone (102) ;
- au moins une mémoire configurée pour stocker une application d'analyse des signaux générés par le dispositif acoustique et représentatifs des phases réalisées par le camion minier (10) auxquelles les événements acoustiques capturés sont associés ;
- un ou des serveurs (108) de communication comprenant chacun au moins un ou des processeurs connectés de manière opérationnelle à la mémoire, le ou les processeurs comprenant un module d'exécution de l'application d'analyse configuré pour réaliser le traitement des signaux indicatifs des événements acoustiques pour déterminer la présence et/ou l'absence des bruits particuliers et/ou leur fréquence et leur durée, dans lequel le ou les processeurs sont configurés pour exécuter des instructions programmées stockées dans la mémoire

pour réaliser les étapes suivantes :

- une étape (202) d'opération du système (100) pendant laquelle le dispositif acoustique capture un ou des événements acoustiques en temps réel et génèrent un ou des signaux indicatifs de chaque événement acoustique capturé ;
- une étape (204) de l'envoi du ou des signaux au serveur (108) réalisée par le dispositif acoustique ;
- une étape (206) de filtrage et d'analyse des signaux envoyés réalisée par le processeur du serveur (108) recevant les signaux ; et
- une étape (208) de construction d'un graphique de cycles sonores représentant des corrélations temporelles entre les événements acoustiques analysés et un ordre chronologique attendu d'une ou des phases associées, pendant laquelle le processeur compare le graphique construit avec un ou plusieurs graphiques prédéfinis, chacune d'entre eux étant indicatif des événements acoustiques unitaires spécifiques et agencés et les phases dont ils sont associés ;

de sorte que chaque évènement acoustique se **caractérise par** une signature acoustique permettant d'identifier des périodes de chargement et de déchargement et des périodes de roulage en charge et à vide à partir de l'amplitude et de la fréquence des enregistrements.

2. Système (100) de la revendication 1, dans lequel les phases du cycle minier (10) dont les événements acoustiques associés sont détectés et enregistrés comprennent :

   - une phase (1) de chargement du minerai dans la benne (10a) du camion minier (10) à l'arrêt dans une zone de chargement;
   - une phase (2) de roulage chargée du camion minier (10) ;
   - une phase (3) de déchargement du minerai avec le camion minier 10 à l'arrêt à une zone de déchargement;
   - une phase (4) de roulage à vide du camion minier (10) ; et
   - à la fin du cycle, une phase d'attente de chargement avec le camion minier (10) à l'arrêt .

3. Système (100) de la revendication 1 ou de la revendication 2, dans lequel la signature acoustique de chaque évènement acoustique est classée entre deux types de bruits comprenant :

   - un bruit blanc associé avec au moins un bruit parmi un bruit du moteur, un bruit ralentisseur et/ou un bruit minerai ; et
   - un bruit harmonique associé avec au moins un bruit parmi un régime moteur, un klaxon, un son de recul et une résonance de la benne (10a).

4. Système (100) de l'une quelconque des revendications 1 à 3, dans lequel le dispositif d'enregistrement acoustique (104) comprend un moyen de détection d'accélération monté sur ou dans le camion minier (10) de manière à pouvoir détecter le choc du chargement et/ou du déchargement du camion (10).

5. Système (100) de l'une quelconque des revendications 1 à 4, comprenant en outre au moins un système télématique pour permettre la surveillance et l'enregistrement de données opérationnelles du camion minier (10).

6. Système (100) de l'une quelconque des revendications 1 à 5, comprenant en outre un moyen de localisation monté sur ou dans le camion minier (10) choisi parmi un système de positionnement global GPS et un système de navigation inertielle.

7. Système (100) de l'une quelconque des revendications 1 à 6, comprenant en outre un réseau de communication (106) qui gère les données entrantes au système (100), le réseau de communication (106) incorporant au moins un serveur (108) de communication avec au moins un processeur qui gère les données correspondant à un camion minier identifié.

8. Système (100) de la revendication 7, dans lequel le serveur (108) est associé à un ou plusieurs gestionnaires (108) de camions miniers, y compris un ou des producteurs miniers auxquels appartient le camion minier (10).

9. Procédé (200) permettant la détection des événements acoustiques liés aux phases d'un cycle du camion minier (10), le procédé (200) étant mis en œuvre par un système (100) installable dans un camion minier (10), **caractérisé en ce que** le procédé (200) comprend les étapes suivantes :

- une étape (202) d'opération du système (100) pendant laquelle un dispositif acoustique du système capture un ou des événement acoustiques en temps réel et génèrent un ou des signaux indicatifs de chaque événement acoustique capturé ;
- une étape (204) de l'envoie du ou des signaux à un serveur (108) du système (100) réalisée par le dispositif acoustique ;
- une étape (206) de filtrage et d'analyse des signaux envoyés pour déterminer la présence et/ou l'absence des bruits particuliers et/ou leur fréquence et leur durée, cette étape étant réalisée par un processeur du serveur (108) recevant les signaux ; et
- une étape (208) de construction d'un graphique de cycles sonores représentant des corrélations temporelles entre les événements acoustiques analysés et un ordre chronologique attendu d'une ou des phases associées, pendant laquelle le processeur peut comparer le graphique construit avec un ou plusieurs graphiques prédéfinis, chacune d'entre eux étant indicatif des événements acoustiques unitaires spécifiques et agencés et les phases dont ils sont associés ;

de sorte que chaque évènement acoustique se **caractérise par** une signature acoustique permettant d'identifier des périodes de chargement et de déchargement et des périodes de roulage en charge et à vide à partir de l'amplitude et de la fréquence des enregistrements.

**10.** Procédé de la revendication 9, comprenant en outre une méthode de traitement d'un signal acoustique de type bruit blanc large bande, associé avec au moins un bruit parmi un bruit du moteur, un bruit ralentisseur et/ou un bruit minerai, cette étape comprenant les étapes suivantes :

- une étape de filtrage du signal dans la bande fréquentielle correspondante ;
- une étape de décimation afin de limiter la charge de calcul ;
- une étape de calcul d'un niveau sonore moyen du signal filtré Root Mean Square (RMS) ; et
- une étape de comparaison du niveau sonore moyen calculé par rapport à un seuil prédéterminé.

**11.** Procédé de la revendication 9, comprenant en outre une étape de traitement d'un signal acoustique de type bruit blanc large bande, associé avec au moins un bruit parmi un bruit du moteur, un bruit ralentisseur et/ou un bruit minerai, cette étape comprenant les étapes suivantes :

- une étape de calcul du spectre fréquentiel sur une fenêtre glissante du signal temporel ; et
- une étape de déduction de la puissance acoustique par intégration dans la bande fréquentielle voulue.

**12.** Procédé de la revendication 9, comprenant en outre une étape de traitement d'un signal acoustique de type bruit harmonique, associé avec au moins un bruit parmi un régime moteur, un klaxon, un son de recul et une résonance de la benne (10a), cette étape comprenant les étapes suivantes :

- une étape de filtrage du signal dans la bande fréquentielle correspondante ;
- une étape de décimation du signal brut ; et
- une étape de détection des harmoniques du signal net.

**13.** Procédé (200) de la revendication 12, dans lequel l'étape de détection des harmoniques du signal est réalisée par une méthode choisie parmi des méthodes du type filtre en peigne, analyse cepstrale, autocorrélation spectrale et moyenne synchrone.

**14.** Procédé de l'une quelconque des revendications 9 à 13, comprenant en outre une étape d'identification d'emplacements prévus pour le camion minier (10), dans laquelle l'identification comprend l'identification de coordonnées de chaque emplacement prévu en utilisant des données obtenues par un moyen de localisation monté sur ou dans le camion minier (10).

**15.** Un camion minier (10), comprenant une benne (10a) montée de manière pivotante sur un châssis (10b), une cabine (10c) où un opérateur du camion minier (10) s'installe, et un moteur associé avec le châssis (10b), le camion minier comprenant un système selon l'une des revendications 1 à 8.

## Patentansprüche

1. System (100), das in einen Bergbau-Lkw (10) einbaubar ist, der eine Mulde (10a), die schwenkbar an einem Fahrgestell (10b) montiert ist, eine Kabine (10c), in die sich ein Bediener des Bergbau-Lkw (10) setzt, und einen dem Fahrgestell (10b) zugeordneten Motor umfasst, wobei das System (100) ein Verfahren (200) einsetzt, das die Detektion der akustischen Ereignisse ermöglicht, die Phasen eines Zyklus des Bergbau-Lkw (10) kennzeichnen, wobei das System (100) Folgendes umfasst:

   - mindestens eine akustische Vorrichtung, die dazu ausgelegt ist, ein akustisches Ereignis zu erfassen, das einer Phase eines Zyklus des Bergbau-Lkw (10) zugeordnet ist, und ein oder mehrere Signale zu erzeugen, die für das erfasste akustische Ereignis bezeichnend sind, wobei jede Phase aus einer Anzahl von spezifischen einzelnen und in einer vorbestimmten chronologischen Reihenfolge angeordneten akustischen Ereignissen besteht, wobei die akustische Vorrichtung Folgendes umfasst:
   - mindestens ein Mikrofon (102), das dazu ausgelegt ist, die jeder Phase des Bergbauzyklus zugeordneten akustischen Ereignisse zu detektieren und zu erfassen, wobei das Mikrofon (102) an oder in dem Bergbau-Lkw (10) installiert ist; und
   - eine akustische Aufzeichnungsvorrichtung (104), die mit dem Mikrofon (102) zugeordnet ist und dazu ausgelegt ist, die von dem Mikrofon (102) erfassten akustischen Ereignisse aufzuzeichnen;
   - mindestens einen Speicher, der dazu ausgelegt ist, eine Analyseanwendung zum Analysieren der Signale zu speichern, die von der akustischen Vorrichtung erzeugt werden und für die von dem Bergbau-Lkw (10) durchgeführten Phasen, denen die erfassten akustischen Ereignisse zugeordnet sind, repräsentativ sind;
   - einen oder mehrere Kommunikationsserver (108), die jeweils mindestens einen oder mehrere Prozessoren umfassen, die operativ mit dem Speicher verbunden sind, wobei der oder die Prozessoren ein Modul zum Ausführen der Analyseanwendung umfassen, das dazu ausgelegt ist, die Verarbeitung der für die akustischen Ereignisse bezeichnenden Signale durchzuführen, um das Vorhandensein und/oder das Nichtvorhandensein der besonderen Geräusche und/oder ihre Frequenz und ihre Dauer zu bestimmen, wobei der oder die Prozessoren dazu ausgelegt sind, programmierte Anweisungen auszuführen, die in dem Speicher gespeichert sind, um die folgenden Schritte durchzuführen:

      - einen Schritt (202) des Betriebs des Systems (100), während dessen die akustische Vorrichtung ein oder mehrere akustische Ereignisse in Echtzeit erfasst und ein oder mehrere Signale erzeugt, die für jedes erfasste akustische Ereignis bezeichnend sind;
      - einen Schritt (204) des Sendens des oder der Signale an den Server (108), der von der akustischen Vorrichtung durchgeführt wird;
      - einen Schritt (206) des Filterns und Analysierens der gesendeten Signale, der von dem Prozessor des die Signale empfangenden Servers (108) durchgeführt wird; und
      - einen Schritt (208) des Erstellens eines Graphen von Schallzyklen, die zeitliche Korrelationen zwischen den analysierten akustischen Ereignissen und einer erwarteten chronologischen Reihenfolge einer oder mehrerer zugeordneter Phasen darstellen, während dessen der Prozessor den erstellten Graphen mit einem oder mehreren vordefinierten Graphen vergleicht, wobei jeder von ihnen für die spezifischen einzelnen und angeordneten akustischen Ereignisse und die Phasen, denen sie zugeordnet sind, bezeichnet ist;

   so dass jedes akustische Ereignis durch eine akustische Signatur gekennzeichnet ist, die es ermöglicht, ausgehend von der Amplitude und der Frequenz der Aufzeichnungen Perioden des Ladens und Entladens und Perioden des Fahrens im beladenen und leeren Zustand zu identifizieren.

2. System (100) nach Anspruch 1, wobei die Phasen des Bergbauzyklus (10), deren zugeordnete akustische Ereignisse detektiert und aufgezeichnet werden, Folgendes umfassen:

   - eine Phase (1) des Ladens des Erzes in die Mulde (10a) des Bergbau-Lkw (10), der in einem Ladebereich stillsteht;
   - eine Phase (2) des Fahrens des Bergbau-Lkw (10) im beladenen Zustand;
   - eine Phase (3) des Entladens des Erzes mit in einem Entladebereich stillstehendem Bergbau-Lkw (10);
   - eine Phase (4) des Fahrens des Bergbau-Lkw (10) im leeren Zustand; und
   - am Ende des Zyklus eine Phase des Wartens auf das Laden mit stillstehendem Bergbau-Lkw (10).

3. System (100) nach Anspruch 1 oder Anspruch 2, wobei die akustische Signatur jedes akustischen Ereignisses in zwei

Arten von Geräuschen klassifiziert wird, die Folgendes umfassen:

- ein weißes Geräusch, das mindestens einem Geräusch unter einem Motorgeräusch und/oder einem Bremsgeräusch und/oder einem Erzgeräusch zugeordnet ist; und
- ein harmonisches Geräusch, das mit mindestens einem Geräusch unter einer Motordrehzahl, einer Hupe, einem Rückfahrwarnton und einer Resonanz der Mulde (10a) zugeordnet ist.

**4.** System (100) nach einem der Ansprüche 1 bis 3, wobei die akustische Aufzeichnungsvorrichtung (104) ein Beschleunigungsdetektionsmittel umfasst, das an oder in dem Bergbau-Lkw (10) montiert ist, so dass es den Stoß des Ladens und/oder Entladens des Lkw (10) erfassen kann.

**5.** System (100) nach einem der Ansprüche 1 bis 4, umfassend ferner mindestens ein Telematiksystem, um die Überwachung und die Aufzeichnung von Betriebsdaten des Bergbau-Lkw (10) zu ermöglichen.

**6.** System (100) nach einem der Ansprüche 1 bis 5, umfassend ferner ein Ortungsmittel, das an oder in dem Bergbau-Lkw (10) montiert ist und das aus einem globalen Positionsbestimmungssystem GPS und einem Trägheitsnavigationssystem ausgewählt ist.

**7.** System (100) nach einem der Ansprüche 1 bis 6, umfassend ferner ein Kommunikationsnetzwerk (106), das die in das System (100) eingehenden Daten verwaltet, wobei das Kommunikationsnetzwerk (106) mindestens einen Kommunikationsserver (108) mit mindestens einem Prozessor beinhaltet, der die einem identifizierten Bergbau-Lkw entsprechenden Daten verwaltet.

**8.** System (100) nach Anspruch 7, wobei der Server (108) einem oder mehreren Bergbau-Lkw-Manager (108) einschließlich von einem oder mehreren Bergbauunternehmen, denen der Bergbau-Lkw (10) gehört, zugeordnet ist.

**9.** Verfahren (200), das die Detektion der mit den Phasen eines Zyklus des Bergbau-Lkw (10) zusammenhängenden akustischen Ereignisse ermöglicht, wobei das Verfahren (200) von einem System (100) eingesetzt wird, das in einen Bergbau-Lkw (10) einbaubar ist, **dadurch gekennzeichnet, dass** das Verfahren (200) die folgenden Schritte umfasst:

- einen Schritt (202) des Betriebs des Systems (100), während dessen eine akustische Vorrichtung des Systems ein oder mehrere akustische Ereignisse in Echtzeit erfasst und ein oder mehrere Signale erzeugt, die für jedes erfasste akustische Ereignis bezeichnend sind;
- einen Schritt (204) des Sendens des oder der Signale an einen Server (108) des Systems (100), der von der akustischen Vorrichtung durchgeführt wird;
- einen Schritt (206) des Filterns und Analysierens der gesendeten Signale, um das Vorhandensein und/oder das Nichtvorhandensein der besonderen Geräusche und/oder ihre Frequenz und ihre Dauer zu bestimmen, wobei dieser Schritt von einem Prozessor des die Signale empfangenden Servers (108) durchgeführt wird; und
- einen Schritt (208) des Erstellens eines Graphen von Schallzyklen, die zeitliche Korrelationen zwischen den analysierten akustischen Ereignissen und einer erwarteten chronologischen Reihenfolge einer oder mehrerer zugeordneter Phasen darstellen, während dessen der Prozessor den erstellten Graphen mit einem oder mehreren vordefinierten Graphen vergleichen kann, wobei jeder von ihnen für die spezifischen einzelnen und angeordneten akustischen Ereignisse und die Phasen, denen sie zugeordnet sind, bezeichnend ist;

so dass jedes akustische Ereignis durch eine akustische Signatur gekennzeichnet ist, die es ermöglicht, ausgehend von der Amplitude und der Frequenz der Aufzeichnungen Perioden des Ladens und Entladens und Perioden des Fahrens im beladenen und leeren Zustand zu identifizieren.

**10.** Verfahren nach Anspruch 9, umfassend ferner eine Methode zum Verarbeiten eines akustischen Signals vom Typ breitbandiges weißes Geräusch, das mindestens einem Geräusch unter einem Motorgeräusch, einem Bremsgeräusch und/oder einem Erzgeräusch zugeordnet ist, wobei dieser Schritt die folgenden Schritte umfasst:

- einen Schritt des Filterns des Signals in dem entsprechenden Frequenzband;
- einen Schritt des Dezimierens, um die Rechenlast zu begrenzen;
- einen Schritt des Berechnens eines mittleren Schallpegels des gefilterten Signals Root Mean Square (RMS); und
- einen Schritt des Vergleichens des berechneten mittleren Schallpegels mit einem vorbestimmten Schwellen-

wert.

**11.** Verfahren nach Anspruch 9, umfassend ferner einen Schritt des Verarbeitens eines akustischen Signals vom Typ breitbandiges weißes Geräusch, das mindestens einem Geräusch unter einem Motorgeräusch, einem Bremsgeräusch und/oder einem Erzgeräusch zugeordnet ist, wobei dieser Schritt die folgenden Schritte umfasst:

- einen Schritt des Berechnens des Frequenzspektrums über ein gleitendes Fenster des zeitlichen Signals; und
- einen Schritt des Ableitens der akustischen Leistung durch Integration in dem gewünschten Frequenzband.

**12.** Verfahren nach Anspruch 9, umfassend ferner einen Schritt des Verarbeitens eines akustischen Signals vom Typ harmonisches Geräusch, das mindestens einem Geräusch unter einer Motordrehzahl, einer Hupe, einem Rückfahrwarnton und einer Resonanz der Mulde (10a) zugeordnet ist, wobei dieser Schritt die folgenden Schritte umfasst:

- einen Schritt des Filterns des Signals in dem entsprechenden Frequenzband;
- einen Schritt des Dezimierens des Rohsignals; und
- einen Schritt des Detektierens der Oberschwingungen des Nettosignals.

**13.** Verfahren (200) nach Anspruch 12, wobei der Schritt des Detektierens der Oberschwingungen des Signals mit einer Methode durchgeführt wird, die unter den Methoden vom Typ Kammfilter, Cepstral-Analyse, spektrale Autokorrelation und synchrone Mittelung ausgewählt ist.

**14.** Verfahren nach einem der Ansprüche 9 bis 13, umfassend ferner einen Schritt des Identifizierens von für den Bergbau-Lkw (10) vorgesehenen Orten, wobei das Identifizieren das Identifizieren von Koordinaten jedes vorgesehenen Orts unter Verwendung der Daten umfasst, die von einem an oder in dem Bergbau-Lkw (10) montierten Ortungsmittel erhalten werden.

**15.** Bergbau-Lkw (10), umfassend eine Mulde (10a), die schwenkbar an einem Fahrgestell (10b) montiert ist, eine Kabine (10c), in die sich ein Bediener des Bergbau-Lkw (10) setzt, und einen dem Fahrgestell (10b) zugeordneten Motor, wobei der Bergbau-Lkw ein System nach einem der Ansprüche 1 bis 8 umfasst.

**Claims**

**1.** System (100) installed in a mining truck (10) that includes a dump body (10a) pivotally mounted on a frame (10b), a cab (10c) where an operator of the mining truck (10) sits, and an engine associated with the frame (10b), the system (100) implementing a method (200) allowing acoustic events denoting phases of a cycle of the mining truck (10) to be detected, the system (100) comprising:

- at least one acoustic device configured to capture an acoustic event associated with a phase of a cycle of the mining truck (10) and to generate one or more signals indicative of the captured acoustic event, each phase consisting of a number of specific unit acoustic events arranged in a predetermined chronological order, the acoustic device comprising:
- at least one microphone (102) configured to detect and to capture the acoustic events associated with each phase of the mining cycle, the microphone (102) being mounted on or in the mining truck (10); and
- an acoustic recording device (104) associated with the microphone (102), configured to record the acoustic events captured by the microphone (102);
- at least one memory configured to store an application for analysing the signals generated by the acoustic device and representative of the phases enacted by the mining truck (10) with which the captured acoustic events are associated;
- one or more communication servers (108) each comprising at least one or more processors operationally connected to the memory, the one or more processors comprising a module for executing the analysing application, configured to processe the signals indicative of the acoustic events to determine the presence and/or absence of particular sounds and/or their frequency and duration, the one or more processors are configured to execut programmed instructions stored in memory to carry out the following steps:

  - a step (202) of operating the system (100), during which step the acoustic device captures one or more acoustic events in real time and generates one or more signals indicative of each captured acoustic event;
  - a step (204) of sending the one or more signals to the server (108), which step is carried out by the acoustic

device;
- a step (206) of filtering and analysing the sent signals, which step is carried out by the processor of the server (108) receiving the signals; and
- a step (208) of constructing a graph of sound cycles representing temporal correlations between the analysed acoustic events and an expected chronological order of one or more associated phases, during which step the processor compares the constructed graph with one or more predefined graphs, each thereof being indicative of the arranged and specific unit acoustic events and the phases with which they are associated;

so that each acoustic event is **characterized by** one acoustic signature allowing periods of loading and of unloading and periods of driving loaded and empty to be identified from the amplitude and frequency of the recordings.

**2.** System (100) of Claim 1, wherein the phases of the mining cycle (10) the associated acoustic events of which are detected and recorded comprise:

- a phase (1) of loading ore into the dump body (10a) while the mining truck (10) is stationary in a loading area;
- a phase (2) of driving the mining truck (10) loaded;
- a phase (3) of unloading the ore with the mining truck 10 stationary in an unloading area;
- a phase (4) of driving the mining truck (10) empty; and
- at the end of the cycle, a phase of waiting for loading with the mining truck (10) stationary.

**3.** System (100) of Claim 1 or Claim 2, wherein the acoustic signature of each acoustic event is classified into two types of sounds comprising:

- a white noise associated with at least one sound among a sound of the engine, a retarder sound and/or an ore sound; and
- a harmonic noise associated with at least one sound among an engine speed, a horn, a reversing sound and a resonance of the dump body (10a).

**4.** System (100) of any one of Claims 1 to 3, wherein the acoustic recording device (104) comprises acceleration-detecting means mounted on or in the mining truck (10) so as to be able to detect the shock of loading and/or unloading the truck (10).

**5.** System (100) of any one of Claims 1 to 4, further comprising at least one telematics system allowing operational data of the mining truck (10) to be monitored and recorded.

**6.** System (100) of any one of Claims 1 to 5, further comprising locating means mounted on or in the mining truck (10) selected from a global positioning system and an inertial navigation system.

**7.** System (100) of any one of Claims 1 to 6, further comprising a communication network (106) that manages the data fed to the system (100), the communication network (106) incorporating at least one communication server (108) with at least one processor that manages the data corresponding to an identified mining truck.

**8.** System (100) of Claim 7, wherein the server (108) is associated with one or more mining-truck managers (108), including one or more mining companies to which the mining truck (10) belongs.

**9.** Method (200) allowing acoustic events related to phases of a cycle of the mining truck (10) to be detected, the method (200) being implemented by a system (100) installed in a mining truck (10), **characterized in that** the method (200) comprises the following steps:

- a step (202) of operating the system (100), during which step an acoustic device of the system captures one or more acoustic events in real time and generates one or more signals indicative of each captured acoustic event;
- a step (204) of sending the one or more signals to a server (108) of the system (100), which step is carried out by the acoustic device;
- a step (206) of filtering and analysing the sent signals to determine the presence and/or absence of particular sounds and/or their frequency and duration, this step being carried out by a processor of the server (108) receiving the signals; and
- a step (208) of constructing a graph of sound cycles representing temporal correlations between the analysed

acoustic events and an expected chronological order of one or more associated phases, during which step the processor may compare the constructed graph with one or more predefined graphs, each thereof being indicative of the arranged and specific unit acoustic events and the phases with which they are associated;

so that each acoustic event is **characterized by** one acoustic signature allowing periods of loading and of unloading and periods of driving loaded and empty to be identified from the amplitude and frequency of the recordings.

**10.** Method of Claim 9, further comprising a method for processing a wideband white-noise acoustic signal associated with at least one sound among a sound of the engine, a retarder sound and/or an ore sound, this step comprising the following steps:

- a step of filtering the signal in the corresponding frequency band;
- a decimating step, in order to limit computational load;
- a step of computing a root-mean-square sound level of the filtered signal; and
- a step of comparing the computed root-mean-square sound level with a predetermined threshold.

**11.** Method of Claim 9, further comprising a step of processing a wideband white-noise acoustic signal associated with at least one sound among a sound of the engine, a retarder sound and/or an ore sound, this step comprising the following steps:

- a step of computing the frequency spectrum in a sliding window of the time-domain signal; and
- a step of deducing acoustic power via integration in the desired frequency band.

**12.** Method of Claim 9, further comprising a step of processing a harmonic acoustic signal associated with at least one sound among an engine speed, a horn, a reversing sound and a resonance of the dump body (10a), this step comprising the following steps:

- a step of filtering the signal in the corresponding frequency band;
- a step of decimating the raw signal; and
- a step of detecting the harmonics of the resulting signal.

**13.** Method (200) of Claim 12, wherein the step of detecting the harmonics of the signal is carried out by way of a method selected from comb-filtering, cepstral-analysis, spectral-autocorrelation, and synchronous-averaging methods.

**14.** Method of any one of Claims 9 to 13, further comprising a step of identifying expected locations of the mining truck (10), wherein the identifying step comprises identifying coordinates of each expected location using data obtained by a locating means mounted on or in the mining truck (10).

**15.** Mining truck (10), comprising a dump body (10a) pivotally mounted on a frame (10b), a cab (10c) in which an operator of the mining truck (10) sits, and an engine associated with the frame (10b), the mining truck comprising a system according to any one of claim 1 to 8.

[Fig. 1]

100
10
10a
10c
102
104
Réseau
106
Serveur(s)
103
Gestionnaire(s)
110
10d
10b
10d

[Fig. 2]

10
1
10
10
2
10a
10a
10
3
10
10
4
10

[Fig. 3]

Amplitude
SIGNAL BRUT
Temps (min)
hms
Féquences (Hz)
SPECTROGRAMME
Scène n°1
avant le départ
Scène n°2
descente
Scène n°3
chargement
Scène n°4
plat et montée

[Fig. 4]

Klaxon n°1
Klaxon n°2
Klaxon n°3
Moteur arrêté
Moteur allumé
Passage Dumper
Passage Dumper
hms
samp
Hz

[Fig. 5]

Sélection analysée
dB
Hz
Moteur allumé

[Fig. 6]

Sélection analysée
Fondamentale
1242 Hz
1264 Hz
~12dB
Harmonique
2484 Hz
2528 Hz
~15dB
dB
Hz
1k
1.1k
1.2k
1.3k
1.4k
1.5k
1.6k
1.7k
1.8k
1.9k
2k
2.1k
2.2k
2.3k
2.4k
2.5k
2.6k
2.7k
2.8k
2.9k
3k

[Fig. 7]

samp
0
Hz
3.8k
3.6k
3.4k
3.2k
3k
2.8k
2.6k
2.4k
2.2k
2k
1.8k
1.6k
1.4k
1.2k
1k
800
600
400
hms
0:05.0
0:10.0
0:15.0
0:20.0
0:25.0
0:30.0
0:35.0
0:40.0
0:45.0
0:50.0
0:55.0
1:00.0
1:05.0
1:10.0
1:15.0
1:20.0
1:25.0
1:30.0
1:35.0
1:40.0
1:45.0
1:50.0
1:55.0
Pompage ralenti moteur
Chargement n°1
Chargement n°2
Chargement n°3

[Fig. 8]

Sélection analysée
Pendant chargement
En dehors du chargement
~10dB
dB
-16 -18 -20 -22 -24 -26 -28 -30 -32 -34 -36 -38 -40 -42 -44 -46 -48 -50 -52 -54 -56 -58 -60 -62 -64 -66 -68 -70 -72 -74 -76
Hz
500 1k 1.5k 2k 2.5k 3k 3.5k 4k 4.5k 5k 5.5k 6k 6.5k 7k 7.5k

[Fig. 9]

Sélection analysée
<< Peigne de Dirac >> moteur → pas = 16 Hz
~20dB
15 harmoniques
Fondamentale → 16 Hz
dB
-16
-18
-20
-22
-24
-26
-28
-30
-32
-34
-36
-38
-40
-42
-44
-46
-48
-50
-52
-54
-56
-58
-60
-62
Hz
20
40
60
80
100
120
140
160
180
200
220
240
260
280
300
320
340
360
380
400
420
440
460
480
500
520
540
560
580
600
620
640
660
680

[Fig. 10]

Levée de benne
Régime moteur élevé
Marche arrière
Bip de recul
Descente vers la zone de déchargement
Ralentisseur
hms
0:05.0
0:10.0
0:15.0
0:20.0
0:25.0
0:30.0
0:35.0
0:40.0
0:45.0
0:50.0
0:55.0
1:00.0
1:05.0
1:10.0
1:15.0
1:20.0
1:25.0
1:30.0
1:35.0
1:40.0
samp
100
Hz
2.2k
2.1k
2k
1.9k
1.8k
1.7k
1.6k
1.5k
1.4k
1.3k
1.2k
1.1k
1k
900
800
700
600
500
400
300
200
100

[Fig. 11]

Phases du cycle
Chargement
Montée
Déchargement
Descente
Attente
ralenti
haut régime
moyen régime
ralenti
Temps
Evènements acoustiques
Moteur
Ralentisseur
Bip recul
Klaxon
Benne

[Fig. 12]

200
Start
Opération du dispositif acoustique monté sur camion minier 10
202
Envoi des signaux indicatifs des évènements acoustiques au serveur 108
204
Filtration et analyse des signaux envoyés
206
Construction de graphiques de cycles sonores
208

[Fig. 13]

Régime moteur : 5 - 18 Hz
Fréquence (Hz)
Ralentisseur : 950 - 1250 Hz + 2000 - 2500 Hz
RMS
Bip de recul : 1335 - 1345 Hz
RMS
Klaxon avant : 700 - 3900 Hz
Indicateur standardisé
Ralentisseur : 950 - 1250 Hz + 2000 - 2500 Hz
RMS
t (min)

[Fig. 14]

Régime moteur : 5 - 18 Hz
fréquence (Hz)
Ralentisseur : 950 - 1250 Hz + 2000 - 2500 Hz
Bip de recul : 1335 - 1345 Hz
Klaxon avant : 700 - 3900 Hz
Benne : 1 - 14 Hz
t (min)

[Fig. 15]

Régime moteur : 5 - 18 Hz
fréquence (Hz)
15
10
5
0
Ralentisseur : 950 - 1250 Hz + 2000 - 2500 Hz
Bip de recul : 1335 - 1345 Hz
Klaxon avant : 700 - 3900 Hz
Benne : 1 - 14 Hz
1
0.5
0
0.5
1
1.5
2
2.5
3
3.5
4
t (min)

[Fig. 16]

Régime moteur : 5 - 18 Hz
fréquence (Hz)
Ralentisseur : 950 - 1250 Hz + 2000 - 2500 Hz
Bip de recul : 1335 - 1345 Hz
Klaxon avant : 700 - 3900 Hz
Benne : 1 - 14 Hz
t (min)

[Fig. 17]

cycle n°1
cycle n°2
cycle n°3
fréquence (Hz)
Régime moteur : 5 - 18 Hz
Ralentisseur : 950 - 1250 Hz + 2000 - 2500 Hz
Bip de recul : 1335 - 1345 Hz
Klaxon avant : 700 - 3900 Hz
Benne : 1 - 14 Hz
Chargement
Montée
Déchargement
Descente
Attente
Chargement
Montée
Déchargement
Descente
Attente
Chargement
Montée
Déchargement
Descente
Attente

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 9792739 B
- US 9302859 B
- US 10308157 B
- US 7395184 B
- US 2015020609 A